# EUROPEAN PATENT APPLICATION

(11) **EP 4 518 399 A1**
(43) Date of publication of application: **05.03.2025**
(21) Application number: 22939842.5
(22) Date of filing: 07.11.2022
(51) Int. Cl.: H04W 24/02

(54) **INFORMATION INDICATION METHOD AND APPARATUS AND INFORMATION PROCESSING METHOD AND APPARATUS**

(30) Priority: 29.04.2022 WO PCT/CN2022/090529
(71) Applicant: FUJITSU LIMITED, Kawasaki-shi, Kanagawa 211-8588 (JP)
(72) Inventor: WANG, Xin, Beijing 100022 (CN); SUN, Gang, Beijing 100022 (CN); ZHANG, Qun, Beijing 100022 (CN); SHAN, Yujia, Beijing 100022 (CN); JIA, Meiyi, Beijing 100022 (CN); LI, Guorong, Beijing 100022 (CN)
(74) Representative: Haseltine Lake Kempner LLP
(86) International application number: PCT/CN2022/130202
(87) International publication number: WO 2023/207026

(57) **Abstract**

Embodiments of the present disclosure provide information indication and processing methods and apparatuses therefor. The method includes: a first network device determines whether to stop or update or switch an AI/ML model or an AI/ML model group for a signal processing function, and transmits indication information to a second network device or a terminal equipment or a core network device in a case where it is determined to stop or update or switch the AI/ML model or the AI/ML model group.

## Description

### TECHNICAL FIELD

Embodiments of the present disclosure relate to the field of communication technologies.

### BACKGROUND

As low frequency band spectrum resources become scarce, a millimeter-wave frequency band is capable of providing a greater bandwidth and becomes an important frequency band for a 5G New Radio (NR) system. Millimeter wave has different propagation characteristics from traditional low frequency bands due to its shorter wavelength, such as a higher propagation loss, poor reflection and diffraction performance, etc. Therefore, a larger-scale array of antennas will be usually used to form a shaped beam with a greater gain, which overcomes propagation losses and ensures system coverage.

With development of Artificial Intelligence (AI) and Machine Learning (ML) technologies, applying the AI/ML technologies to radio communication becomes a current technical direction, so as to solve the difficulties of traditional methods. Applying AI/ML models in radio communication systems, particularly in transmission of air interfaces, is a new technology in 5G-Advanced and 6G stages.

For example, in terms of reporting Channel State Information (CSI), the CSI is encoded/compressed using an AI encoder at a terminal equipment side, and the CSI is decoded/de-compressed using an AI decoder at a network device side, which may reduce feedback overhead. For another example, in terms of Beam Management, using AI/ML models to predict spatially optimal beam pairs according to a result of a small number of beam measurements may reduce a load and latency of a system.

It should be noted that the above introduction to the technical background is just to facilitate a clear and complete description of the technical solutions of the present disclosure, and is elaborated to facilitate the understanding of persons skilled in the art. It cannot be considered that said technical solutions are known by persons skilled in the art just because these solutions are elaborated in the Background of the present disclosure.

### SUMMARY

However, the inventor finds that as AI/ML models trained according to data sets, how to adapt to demands for various wireless applications and how to cope with the ever-changing mobile communication environments bring great challenges to AI/ML schemes themselves. For rich wireless communication scenarios, such as suburbs, urban areas, indoors, factories, mines, it is difficult for off-line trained AI/ML models to ensure to keep consistent performance in various circumstances. Therefore, it is necessary to monitor the performance of AI/ML model running and stop using an AI/ML model when necessary.

For at least one of the above problems, the embodiments of the present disclosure provide an information indication and processing methods and apparatuses therefor.

According to one aspect of the embodiments of the present disclosure, an information indication method is provided, including:
a first network device determines whether to stop or update or switch an AI/ML model or an AI/ML model group for a signal processing function; and
transmits indication information to a second network device or a terminal equipment or a core network device in a case where it is determined to stop or update or switch the AI/ML model or the AI/ML model group.

According to another aspect of the embodiments of the present disclosure, an information indication apparatus is provided, including:
a determining unit configured to determine whether to stop or update or switch an AI/ML model or an AI/ML model group for a signal processing function; and
a transmitting unit configured to transmit indication information to a second network device or a terminal equipment or a core network device in a case where it is determined to stop or update or switch the AI/ML model or the AI/ML model group.

According to a further aspect of the embodiments of the present disclosure, an information processing method is provided, including:
receiving indication information transmitted by a first network device; and
stopping or updating or switching an AI/ML model or an AI/ML model group for a signal processing function according to the indication information.

According to a further aspect of the embodiments of the present disclosure, an information processing apparatus is provided, including:
a receiving unit configured to receive indication information transmitted by a first network device; and
a processing unit configured to stop or update or switch an AI/ML model or an AI/ML model group for a signal processing function according to the indication information.

According to another aspect of the embodiments of the present disclosure, a communication system is provided, including:
a network device configured to determine whether to stop or update or switch an AI/ML model or an AI/ML model group for a signal processing function, and transmit indication information to a second network device or a terminal equipment or a core network device in a case where it is determined to stop or update or switch the AI/ML model or the AI/ML model group.

One of the advantageous effects of the embodiments of the present disclosure lies in that: a first network device determines whether to stop or update or switch an AI/ML model or an AI/ML model group for a signal processing function, and transmits indication information to a second network device or a terminal equipment or a core network device in a case where it is determined to stop or update or switch the AI/ML model or the AI/ML model group; hence, performance of AI/ML model running may be monitored, consistency of the AI/ML model running may be maintained, and robustness of the model running may be improved.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. **In** addition, in the drawings, similar labels represent corresponding components in several drawings and may be used to indicate corresponding components used in more than one implementation.
FIG. 1 is a schematic diagram of a communication system in the embodiments of the present disclosure;
FIG. 2 is a schematic diagram of an information indication method in the embodiments of the present disclosure;
FIG. 3 is a schematic diagram of interaction between a network device and a network device in the embodiments of the present disclosure;
FIG. 4 is a schematic diagram of interaction between a network device and a core network device in the embodiments of the present disclosure;
FIG. 5 is a schematic diagram of interaction between a network device and a terminal equipment in the embodiments of the present disclosure;
FIG. 6 is a schematic diagram of interaction between a network device and a terminal equipment in the embodiments of the present disclosure;
FIG. 7 is a schematic diagram of interaction between a network device and a terminal equipment in the embodiments of the present disclosure;
FIG. 8 is a schematic diagram of interaction between a network device and a terminal equipment in the embodiments of the present disclosure;
FIG. 9 is a schematic diagram of interaction between a network device and a terminal equipment in the embodiments of the present disclosure;
FIG. 10 is a schematic diagram of interaction between a network device and a terminal equipment in the embodiments of the present disclosure;
FIG. 11 is a schematic diagram of interaction between a network device and a terminal equipment in the embodiments of the present disclosure;
FIG. 12 is a schematic diagram of an information processing method in the embodiments of the present disclosure;
FIG. 13 is a schematic diagram of an information processing method in the embodiments of the present disclosure;
FIG. 14 is a schematic diagram of an information processing method in the embodiments of the present disclosure;
FIG. 15 is a schematic diagram of an information indication apparatus in the embodiments of the present disclosure;
FIG. 16 is a schematic diagram of an information processing apparatus in the embodiments of the present disclosure;
FIG. 17 is a schematic diagram of composition of a network device or core network device in the embodiments of the present disclosure;
FIG. 18 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "BS" may include their some or all functions, each BS may provide communication coverage to a specific geographic region. The term "a cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

The scenarios of the embodiments of the present disclosure are described through the following examples, however the present disclosure is not limited to these.

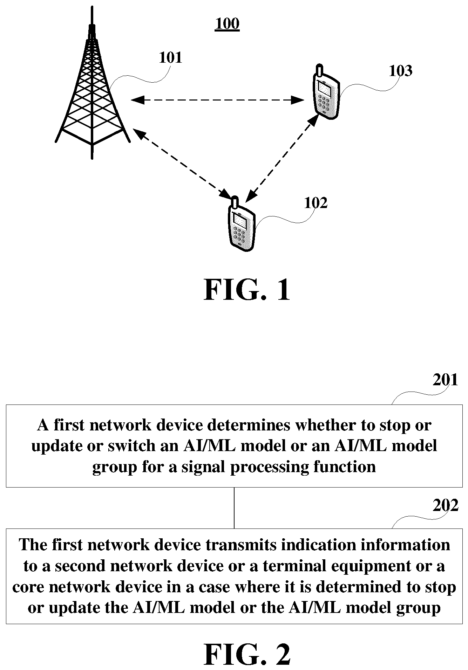

FIG. 1 is a schematic diagram of a communication system in the embodiments of the present disclosure, schematically describes a situation by taking a terminal equipment and a network device as an example, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present disclosure, higher layer signaling may be e.g. radio resource control (RRC) signaling; for example, is called an RRC message, for example includes an MIB, system information, and a dedicated RRC message; or is called an RRC information element (RRC IE). The higher layer signaling, for example, may further be Medium Access Control (MAC) signaling; or called a MAC control element (MAC CE). However, the present disclosure is not limited to these.

In the embodiments of the present disclosure, one or more AI/ML models may be configured and run in a network device and/or a terminal equipment. The AI/ML model may be used for various signal processing functions of wireless communication, such as CSI estimation and reporting, beam management and beam prediction, etc.; the present disclosure is not limited to this.

### Embodiments of a first aspect

The embodiments of the present disclosure provide an information indication method, which is described from a first network device side.

FIG. 2 is a schematic diagram of an information indication method in the embodiments of the present disclosure. As shown in FIG. 2, the method includes:
201, a first network device determines whether to stop or update or switch an AI/ML model or an AI/ML model group for a signal processing function; and
202, the first network device transmits indication information to a second network device or a terminal equipment or a core network device in a case where it is determined to stop or update or switch the AI/ML model or the AI/ML model group.

It should be noted that the above FIG. 2 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 2.

In some embodiments, the first network device may monitor its own AI/ML model, for example performs performance evaluation according to input and output data of the model, and determines to stop the AI/ML model in case of poor performance (for example a performance result is lower than a performance threshold). In addition, the first network device may further obtain a model having better performance through self-training (or online training) and determine to update an AI/ML model being used by the first network device.

In some embodiments, the first network device may monitor an AI/ML model of a second network device (within an area), for example performs performance evaluation according to a signal from the second network device, and determines to stop the AI/ML model in the second network device in case of poor performance (a performance result is lower than a performance threshold). In addition, the first network device may further determine to update the AI/ML model within the area.

In some embodiments, the first network device may monitor an AI/ML model of a terminal equipment (within a cell), for example performs performance evaluation according to a signal from the terminal equipment, and determines to stop the AI/ML model in the terminal equipment in case of poor performance (a performance result is lower than a performance threshold). In addition, the first network device may further determine to update the AI/ML model within the cell.

On the other hand, the first network device may perform monitoring respectively for AI/ML models with different signal processing functions. For example, for an AI/ML model reported by CSI, a model of a network device and/or a terminal equipment within a cell or an area may be monitored; or for an AI/ML model for beam management, a model of a network device and/or a terminal equipment within a cell or an area may be monitored. For AI/ML models with different signal processing functions, monitoring may be carried out independently.

Accordingly, for stop or update or switching of an AI/ML model with a signal processing function, the first network device transmits indication information to the second network device or the terminal equipment or a core network device. Performance run by an AI/ML model with a signal processing function within a cell or within an area may be monitored, consistency of the AI/ML model running may be maintained, and robustness of the model running may be improved.

In the following description, various embodiments are applicable to both "model" and "model group", unless otherwise specified. In addition, operations such as "stop", "update" and "switch" are illustrated as examples. The above operations may be applied to each embodiment of the present disclosure, and other AI/ML related operations may also be used.

The following text first describes the interaction between network devices.

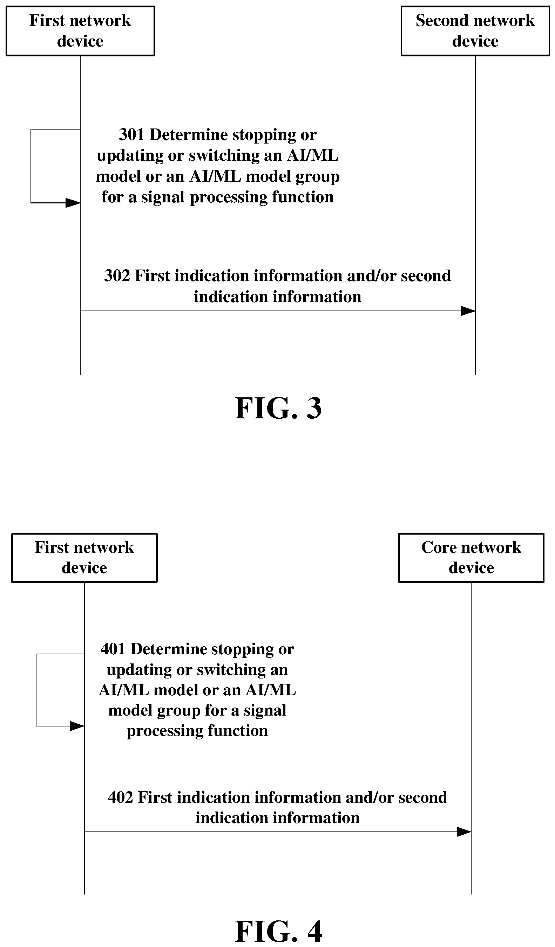

FIG. 3 is a schematic diagram of interaction between a network device and a network device in the embodiments of the present disclosure. As shown in FIG. 3, the method may include:
301, a first network device determines whether to stop or update or switch an AI/ML model or an AI/ML model group for a signal processing function; and
302, in a case where it is determined to stop or update or switch the AI/ML model or the AI/ML model group, the first network device transmits to the second network device first indication information for stopping the AI/ML model or the AI/ML model group and/or second indication information for updating the AI/ML model or the AI/ML model group via an Xn interface.

It should be noted that the above FIG. 3 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 3.

In some embodiments, the first indication information is carried by an XnAP message; for example, the XnAP message includes a configuration update (NG-RAN node Configuration Update) message, an Xn setup message or a resource state update message; the present disclosure is not limited to this, for example, the XnAP message may further be a new XnAP message.

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information; the present disclosure is not limited to this, for example the first indication information may further include other information.

For example, the first indication information includes {CSI; ID 1}, indicating stopping an AI/ML model with an identifier ID 1 for CSI reporting; for another example, the first indication information includes {CSI}, indicating stopping all AI/ML models for CSI reporting; for a further example, the first indication information includes {CSI; ID 1; V2.0}, indicating stopping that an AI/ML model with an identifier ID 1 and a version 2.0 for CSI reporting.

The above text only exemplarily describes the first indication information, but the present disclosure is not limited to this, for example, it may further be indicated by means of a predefined index. In addition, the first indication information may be indicated either explicitly via a field or information element (IE) contained in a message, or may be indicated implicitly by means of being associated with the message.

In some embodiments, the first indication information is used by the second network device to determine whether to stop an AI/ML model in the second network device, and/or, determine whether to stop an AI/ML model in a terminal equipment within a cell.

For example, in a case where at least one piece of the identification information of the signal processing function to which the AI/ML model in the second network device corresponds, the identification information of the AI/ML model, or the version information of the AI/ML model is in consistence with the first indication information, the second network device determines to stop the AI/ML model in the second network device.

For example, after the second network device receives the first indication information {CSI; ID 1}, if it per se is running an AI/ML model with an identifier ID 1 for CSI reporting, the second network device stops the AI/ML model with an identifier ID 1 for CSI reporting.

For another example, in a case where at least one piece of the identification information of the signal processing function to which the AI/ML model in a terminal equipment within the cell corresponds, the identification information of the AI/ML model, or the version information of the AI/ML model is in consistence with the first indication information, the second network device notifies the terminal equipment to stop the AI/ML model in the terminal equipment.

For example, after receiving the first indication information {CSI; ID 1}, if knowing that one or more terminal equipments within a cell are running an AI/ML model with an identifier ID 1 for CSI reporting, the second network device transmits a notification message to the terminal equipments within the cell, notifying the terminal equipments to stop the AI/ML model with an identifier ID 1 for CSI reporting.

In some embodiments, the first network device receives a confirmation message or a rejection message or a failure message transmitted by the second network device.

For example, the second network device, after successfully stopping the AI/ML model with an identifier ID 1 for CSI reporting, feeds back a confirmation message to the first network device. For another example, the second network device, if not running the AI/ML model with an identifier ID 1 for CSI reporting, feeds back a failure message to the first network device. For a further example, the second network device, if running the AI/ML model with an identifier ID 1 for CSI reporting but determining not to stop the model, feeds back a rejection message to the first network device.

Indication of the AI model identifier is only exemplary, and may further include one or more combinations of an AI function indication identifier, an AI type indication identifier, an AI model group indication identifier, or an AI model intra-group indication identifier, etc. Through corresponding one or more combinations of indications, interaction of stop information between adjacent network nodes for a specific AI model may be achieved.

The above text schematically describes the situations for stopping a model. The following text describes the situations for updating the model.

In some embodiments, the second indication information is carried by an XnAP message. For example, the XnAP message includes a configuration update (NG-RAN node Configuration Update) message, an Xn setup message or a resource state update message; the present disclosure is not limited to this, for example, the XnAP message may further be a new XnAP message.

In some embodiments, the second indication information includes at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information; the present disclosure is not limited to this, for example the second indication information may further include other information.

For example, the second indication information includes {CSI; ID1; ID2}, indicating updating the AI/ML model with an identifier ID 1 for CSI reporting to be an AI/ML model with an identifier ID 2. For another example, the second indication information includes {CSI}, indicating updating all the AI/ML models for CSI reporting. For a further example, the second indication information includes {CSI; ID2; V2.0}, indicating updating the AI/ML model for CSI reporting to be an AI/ML model with an identifier ID 2 and a version 2.0.

The above text only exemplarily describes the second indication information, but the present disclosure is not limited to this, for example, it may further be indicated by means of a predefined index. In addition, the second indication information may be indicated either explicitly via a field or information element (IE) contained in a message, or may be indicated implicitly by means of being associated with the message.

In some embodiments, the second indication information is used by the second network device to determine whether to update an AI/ML model in the second network device, and/or, determine whether to update an AI/ML model in a terminal equipment within a cell.

For example, in a case where the identification information of the signal processing function to which the AI/ML model in the second network device corresponds is in consistence with the second indication information, and the identification information of the AI/ML model is not in consistence with the second indication information and/or the version information of the AI/ML model is lower than the version information of the AI/ML model in the second indication information, the second network device determines to update the AI/ML model in the second network device.

For example, after the second network device receives the second indication information {CSI; ID 1; ID2}, if it per se is using an AI/ML model with an identifier ID 1 for CSI reporting, the second network device updates the AI/ML model with an identifier ID 1 for CSI reporting to be an AI/ML model with an identifier ID 2.

For another example, in a case where the identification information of the signal processing function to which the AI/ML models in one or more terminal equipments within a cell corresponds is in consistence with the second indication information, and the identification information of the AI/ML models is not in consistence with the second indication information and/or the version information of the AI/ML models is lower than the version information of the AI/ML models in the second indication information, the second network device notifies the terminal equipments to update the AI/ML model in the terminal equipments.

For example, after receiving the second indication information {CSI; ID 1; ID2}, if knowing that one or more terminal equipments within a cell are using an AI/ML model with an identifier ID 1 for CSI reporting, the second network device transmits a notification message to the terminal equipments within the cell, notifying the terminal equipments to update the AI/ML model with an identifier ID 1 for CSI reporting to be an AI/ML model with an identifier ID 2.

In some embodiments, the first network device receives a confirmation message or a rejection message or a failure message transmitted by the second network device.

For example, the second network device, after successfully updating the AI/ML model for CSI reporting, feeds back a confirmation message to the first network device. For another example, the second network device, if not successfully updating the AI/ML model for CSI reporting, feeds back a failure message to the first network device. For a further example, the second network device, if using the AI/ML model for CSI reporting but determining not to update the model, feeds back a rejection message to the first network device.

In some embodiments, a model per se may be updated, for example a lower version model is updated to a higher version model, or may further be updated to a new model, or switched to a model having better performance, etc., and the embodiments of the present disclosure do not make limitations in this regard.

The following text then describes the interaction between a network device and a core network device.

FIG. 4 is a schematic diagram of interaction between a network device and a core network device in the embodiments of the present disclosure. As shown in FIG. 4, the method may include:
401, a first network device determines whether to stop or update or switch an AI/ML model or an AI/ML model group for a signal processing function; and
402, in a case where it is determined to stop or update or switch the AI/ML model or the AI/ML model group, the first network device transmits first indication information for stopping the AI/ML model or the AI/ML model group, and/or second indication information for updating the AI/ML model or the AI/ML model group, to the core network device via an NG interface.

It should be noted that the above FIG. 4 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 4.

In some embodiments, the first indication information is carried by an NGAP message. For example, the NGAP message including an RAN configuration update message, an NG setup message, an Xn setup message or an RAN configuration transfer message; the present disclosure is not limited to this, for example, the NGAP message may further be a new NGAP message.

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information; the present disclosure is not limited to this, and the first indication information may further include other information.

For example, the first indication information includes {CSI; ID 1}, indicating stopping an AI/ML model with an identifier ID 1 for CSI reporting. For another example, the first indication information includes {CSI}, indicating stopping all the AI/ML models for CSI reporting. For a further example, the first indication information includes {CSI; ID 1; V2.0}, indicating stopping an AI/ML model with an identifier ID 1 and a version 2.0 for CSI reporting.

The above text only exemplarily describes the first indication information, but the present disclosure is not limited to this, for example, it may further be indicated by means of a predefined index. In addition, the first indication information may be indicated either explicitly via a field or information element (IE) contained in a message, or may be indicated implicitly by means of being associated with the message.

In some embodiments, the first indication information is used by the core network device to determine whether to stop an AI/ML model in a network device and/or a terminal equipment within an area.

For example, in a case where at least one piece of the identification information of the signal processing function to which the AI/ML model in a network device within the area corresponds, the identification information of the AI/ML model, or the version information of the AI/ML model is in consistence with the first indication information, the core network device notifies the network device to stop the AI/ML model in the network device via an NGAP message.

For example, after receiving the first indication information {CSI; ID 1}, if knowing that one or more network devices within the area are running an AI/ML model with an identifier ID 1 for CSI reporting, the core network device transmits an NGAP message to the network devices within the area, notifying the network devices to stop the AI/ML model with an identifier ID 1 for CSI reporting.

For another example, in a case where at least one piece of the identification information of the signal processing function to which the AI/ML model in a terminal equipment within the area corresponds, the identification information of the AI/ML model, or the version information of the AI/ML model is in consistence with the first indication information, the core network device notifies the terminal equipment to stop the AI/ML model in the terminal equipment via an NAS message.

For example, after receiving the first indication information {CSI; ID 1}, if knowing that one or more terminal equipments within the area are running an AI/ML model with an identifier ID 1 for CSI reporting, the core network device transmits an NAS message to the terminal equipments within the area, notifying the terminal equipments to stop the AI/ML model with an identifier ID 1 for CSI reporting.

In some embodiments, the first network device receives a confirmation message or a rejection message or a failure message transmitted by the core network device.

For example, after one or more network devices or terminal equipments within the area successfully stops the AI/ML models with an identifier ID 1 for CSI reporting, the core network device feeds back a confirmation message to the first network device. For another example, if the AI/ML models with an identifier ID 1 for CSI reporting are not run in one or more network devices and terminal equipments within the area, the core network device feeds back a failure message to the first network device. For a further example, if the AI/ML models with an identifier ID 1 for CSI reporting are run in one or more network devices or terminal equipments within the area but the core network device determines not to stop the models, the core network device feeds back a rejection message to the first network device.

The above text schematically describes the situations for stopping a model. The following text describes the situations for updating the model.

In some embodiments, the second indication information is carried by an NGAP message, the NGAP message including an RAN configuration update message, an NG setup message, an Xn setup message or an RAN configuration transfer message; the present disclosure is not limited to this, and the NGAP message may further be a new NGAP message.

In some embodiments, the second indication information includes at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information; the present disclosure is not limited to this, and the second indication information may further include other information.

For example, the second indication information includes {CSI; ID 1; ID2}, indicating updating the AI/ML model with an identifier ID 1 for CSI reporting to be an AI/ML model with an identifier ID 2. For another example, the second indication information includes {CSI}, indicating updating all the AI/ML models for CSI reporting. For a further example, the second indication information includes {CSI; ID 2; V2.0}, indicating updating the AI/ML model for CSI reporting to be an AI/ML model with an identifier ID 2 and a version 2.0.

The above text only exemplarily describes the second indication information, but the present disclosure is not limited to this, for example, it may further be indicated by means of a predefined index. In addition, the second indication information may be indicated either explicitly via a field or information element (IE) contained in a message, or may be indicated implicitly by means of being associated with the message.

In some embodiments, the second indication information is used by the core network device to determine whether to update an AI/ML model or an AI/ML model group in a network device and/or a terminal equipment within an area.

For example, in a case where the identification information of the signal processing function to which the AI/ML model in the network device within the area corresponds is in consistence with the second indication information and the identification information of the AI/ML model is not in consistence with the second indication information and/or the version information of the AI/ML model is lower than the version information of the AI/ML model in the second indication information, the core network notifies the network device via an NGAP message to update the AI/ML model in the network device.

For example, after the core network device receives the second indication information {CSI; ID 1; ID2}, if knowing that one or more network devices within the area are using an AI/ML model with an identifier ID 1 for CSI reporting, the core network device transmits an NGAP message to the network devices within the area, notifying the network devices to update the AI/ML model with an identifier ID 1 for CSI reporting to be an AI/ML model with an identifier ID 2.

For another example, in a case where the identification information of the signal processing function to which the AI/ML models in one or more terminal equipments within the area corresponds is in consistence with the second indication information, and the identification information of the AI/ML models is not in consistence with the second indication information and/or the version information of the AI/ML models is lower than the version information of the AI/ML models in the second indication information, the core network device notifies the terminal equipments via an NAS message to update the AI/ML models in the terminal equipments.

For example, after receiving the second indication information {CSI; ID 1; ID2}, if knowing that one or more terminal equipments within the area are using an AI/ML model with an identifier ID 1 for CSI reporting, the core network device transmits an NAS message to the terminal equipments within the area, notifying the terminal equipments to update the AI/ML model with an identifier ID 1 for CSI reporting to be an AI/ML model with an identifier ID 2.

In some embodiments, the first network device receives a confirmation message or a rejection message or a failure message transmitted by the core network device.

For example, after one or more network devices and terminal equipments within the area successfully update the AI/ML models for CSI reporting, the core network device feeds back a confirmation message to the first network device. For another example, if the AI/ML models for CSI reporting are not successfully updated in one or more network devices and terminal equipments within the area, the core network device feeds back a failure message to the first network device. For a further example, if one or more network devices and terminal equipments within the area use the AI/ML models for CSI reporting but the core network device determines not to update the models, the core network device feeds back a rejection message to the first network device.

In some embodiments, if a recipient of a message that updates the AI/ML model is a terminal equipment, and the terminal equipment decides to update, and if a new AI/ML model is already stored in the terminal equipment, the terminal equipment performs corresponding update or switching operation; or if the new AI/ML model is not stored in the terminal equipment, a corresponding new AI/ML model may further be downloaded from a core network.

In some embodiments, if a recipient of a message that updates the AI/ML model is a network device, and the network device decides to update, and if a new AI/ML model is already stored in the network device, the network device performs corresponding update or switching operation; or if the new AI/ML model is not stored in the network device, a corresponding new AI/ML model may further be downloaded from a core network.

The following text then describes the interaction between a network device and a terminal equipment.

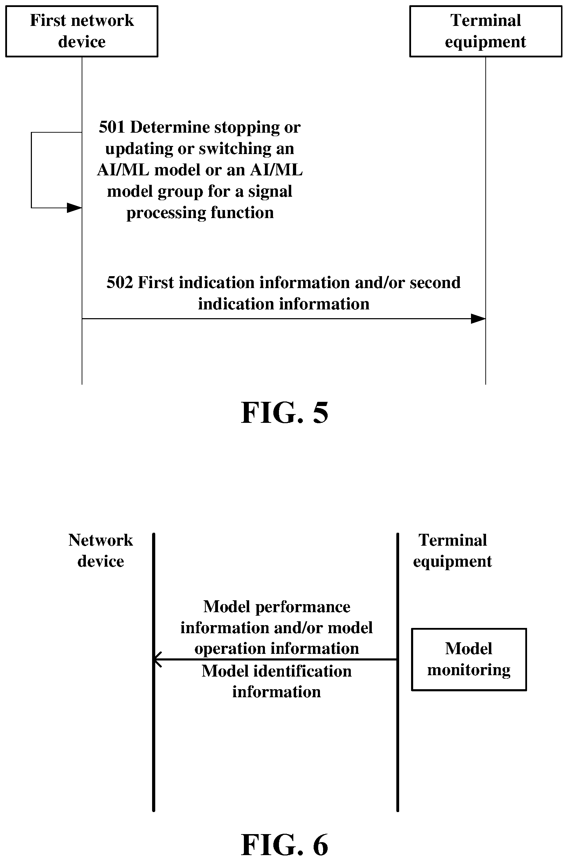

FIG. 5 is a schematic diagram of interaction between a network device and a terminal equipment in the embodiments of the present disclosure. As shown in FIG. 5, the method may include:
501, a first network device determines whether to stop or update or switch an AI/ML model or an AI/ML model group for a signal processing function; and
502, in a case where it is determined to stop or update or switch the AI/ML model or the AI/ML model group, the first network device transmits to one or more terminal equipments in a cell or an area first indication information for stopping the AI/ML model or the AI/ML model group and/or second indication information for updating the AI/ML model or the AI/ML model group via system information and/or a paging message.

It should be noted that the above FIG. 5 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 5.

In some embodiments, using system information to transmit a parameter or indication related to the AI/ML model used within a cell or an area may save air interface signaling overhead. For example, an AI/ML model within a cell or an area may be stopped or updated or switched via a system information update process.

For example, the system information may include SIB 1, or may be a new SIB. For another example, indication information is transmitted to a terminal equipment within a cell via a short message. For a further example, indication information is transmitted to a terminal equipment within a cell via a short message + a paging message (indicating a UE ID).

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information; the present disclosure is not limited to this, and the first indication information may further include other information.

For example, the first indication information includes {CSI; ID 1}, indicating stopping an AI/ML model with an identifier ID 1 for CSI reporting. For another example, the first indication information includes {CSI}, indicating stopping all the AI/ML models for CSI reporting. For a further example, the first indication information includes {CSI; ID 1; V2.0}, indicating stopping an AI/ML model with an identifier ID 1 and a version 2.0 for CSI reporting.

The above text only exemplarily describes the first indication information, but the present disclosure is not limited to this, for example, it may further be indicated by means of a predefined index. In addition, the first indication information may be indicated either explicitly via a field or information element (IE) contained in a message, or may be indicated implicitly by means of being associated with the message.

In some embodiments, the first indication information is used by the terminal equipment to determine whether to stop an AI/ML model in the terminal equipment.

For example, in a case where at least one piece of the identification information of the signal processing function to which the AI/ML model in the terminal equipment corresponds, the identification information of the AI/ML model, or the version information of the AI/ML model is in consistence with the first indication information, the terminal equipment determines to stop the AI/ML model in the terminal equipment.

For example, after the terminal equipment receives the first indication information {CSI; ID 1}, if it per se is running an AI/ML model with an identifier ID 1 for CSI reporting, the terminal equipment stops the AI/ML model with an identifier ID 1 for CSI reporting.

In some embodiments, the first network device receives a confirmation message or a rejection message or a failure message transmitted by the terminal equipment.

For example, the terminal equipment, after successfully stopping the AI/ML model with an identifier ID 1 for CSI reporting, feeds back a confirmation message to the first network device. For another example, the terminal equipment, if not running the AI/ML model with an identifier ID 1 for CSI reporting, feeds back a failure message to the first network device. For a further example, the terminal equipment, if running the AI/ML model with an identifier ID 1 for CSI reporting but determining not to stop the model, feeds back a rejection message to the first network device.

The above text schematically describes the situations for stopping a model. The following text describes the situations for updating the model.

In some embodiments, the second indication information includes at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information; the present disclosure is not limited to this, and the second indication information may further include other information.

For example, the second indication information includes {CSI; ID 1; ID2}, indicating updating the AI/ML model with an identifier ID 1 for CSI reporting to be an AI/ML model with an identifier ID 2. For another example, the second indication information includes {CSI}, indicating updating all the AI/ML models for CSI reporting. For a further example, the second indication information includes {CSI; ID 2; V2.0}, indicating updating the AI/ML model for CSI reporting to be an AI/ML model with an identifier ID 2 and a version 2.0.

The above text only exemplarily describes the second indication information, but the present disclosure is not limited to this, for example, it may further be indicated by means of a predefined index. In addition, the second indication information may be indicated either explicitly via a field or information element (IE) contained in a message, or may be indicated implicitly by means of being associated with the message.

In some embodiments, the second indication information is used by the terminal equipment to determine whether to update an AI/ML model in the terminal equipment.

For example, in a case where the identification information of the signal processing function to which the AI/ML model in the terminal equipment corresponds is in consistence with the second indication information and the identification information of the AI/ML model is not in consistence with the second indication information and/or the version information of the AI/ML model is lower than the version information of the AI/ML model in the second indication information, the terminal equipment determines to update the AI/ML model in the terminal equipment.

For example, after the terminal equipment receives the second indication information {CSI; ID 1; ID2}, if it per se is using an AI/ML model with an identifier ID 1 for CSI reporting, the terminal equipment updates the AI/ML model with an identifier ID 1 for CSI reporting to be an AI/ML model with an identifier ID 2.

In some embodiments, the first network device receives a confirmation message or a rejection message or a failure message transmitted by the terminal equipment.

For example, the terminal equipment, after successfully updating the AI/ML model for CSI reporting, feeds back a confirmation message to the first network device. For another example, the terminal equipment, if not successfully updating the AI/ML model for CSI reporting, feeds back a failure message to the first network device. For a further example, the terminal equipment, if using the AI/ML model for CSI reporting but determining not to update the model, feeds back a rejection message to the first network device.

In some embodiments, the terminal equipment downloads the updated AI/ML model from a cell, or loads the updated AI/ML model from a memory, or acquires the updated AI/ML model from the system information; the present disclosure is not limited to this.

In some embodiments, the network device adds an AI/ML model identifier of a poor-performance AI/ML model to an AI/ML model exclusion list of a cell corresponding to the network device, and broadcasts it as system information in the cell. The exclusion list includes an AI model function identifier and a corresponding AI model identifier. In addition, it may further include an AI model group identifier and an intra-group identifier corresponding to an AI function, etc. Similarly, a model identifier of an AI/ML model at a terminal equipment side, which is poor performance identified by other network device through model monitoring and is determined that it needs to be disabled, may further be added to the AI/ML model exclusion list of the cell.

In some embodiments, the network device may further accumulate a list of models with particularly good AI/ML performance, used by a terminal equipment, and put it into an AI/ML model permission list of a cell, and broadcast it as system information in the cell. The permission list includes an AI model function identifier and a corresponding AI model identifier. In addition, it may further include an AI model group identifier and an intra-group identifier corresponding to an AI function, etc.

In some embodiments, the AI/ML model exclusion list and/or the AI/ML model permission list may be transmitted to an adjacent cell or an adjacent network device, or may be transmitted to a core network device.

The above text describes a terminal equipment within a cell, and the following text then describes a terminal equipment moving to a cell.

In some embodiments, a terminal equipment in an inactive state acquires the identification information of the AI/ML model and/or the version information of the AI/ML model from system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.

In some embodiments, the terminal equipment downloads the updated AI/ML model from a cell, or loads the updated AI/ML model from a memory, or acquires the updated AI/ML model from the system information.

For example, if the terminal equipment is in an inactive state (including RRC_IDLE, RRC_INACTIVE) and has relevant functional modules, corresponding system information may be obtained. When an index of an AI/ML model with a corresponding function included in the system information is not in consistence with an index of an own model in the terminal equipment, an updated AI/ML model may be downloaded or loaded from a memory, or the updated AI/ML model may be acquired from the system information.

In some embodiments, a terminal equipment in an active state acquires the identification information of the AI/ML model and/or the version information of the AI/ML model from a target cell, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.

In some embodiments, the terminal equipment downloads the updated AI/ML model from the target cell, or loads the updated AI/ML model from a memory, or acquires the updated AI/ML model from the system information.

For example, if the terminal equipment is in an active state (i.e., RRC_CONNECTED), a message transmitted by a source base station to a target base station includes information on relevant functional modules (such as a possessed functional module, an ongoing functional module, and a functional module to be performed) of the terminal equipment, and AI /ML model information (such as an AI index being used, a parameter), and/or, a message transmitted by a target base station to a source base station includes information on relevant functional modules (such as a supported functional module), and AI /ML model information (such as a supported AI index, a corresponding parameter).

The terminal equipment may be configured according to information on AI-related functional modules in a message (such as a switch command) transmitted by the target base station. Or, when the terminal equipment completes switch to a target cell (for example, when the target cell completes a random access procedure), the terminal equipment acquires system information of the target cell.

If an index of an AI/ML model with a corresponding function included in the target cell is not in consistence with an index of an own model in the terminal equipment; or AI/ML model IDs are consistent but version information is inconsistent, and if a version of the target cell is higher than its own version, the terminal equipment downloads or loads an updated AI/ML model from a memory, or acquires the updated AI/ML model from system information.

In some embodiments, the first network device receives a request transmitted by the terminal equipment; and transmits system information related to the AI/ML model to the terminal equipment.

The terminal equipment acquires the identification information of the AI/ML model and/or the version information of the AI/ML model from the system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.

For example, an AI/ML module with a signal processing function may initiate a request to update relevant system information after receiving a stop/update message of an AI/ML model or before the terminal equipment is ready to use the AI/ML model with a signal processing function. After receiving the request, a base station transmits the corresponding system information, including a corresponding signal processing function id, and a corresponding stopped AI/ML model index and an updated AI/ML model index, or version information of the corresponding AI/ML model. If the AI/ML model needs to be updated, the terminal equipment updates to the latest AI/ML model of a cell.

In some embodiments, the system information is cell-specific or area-specific.

For example, when a terminal equipment with a signal processing function moves to a cell, or when a terminal equipment with a corresponding signal processing function is turned on, the terminal equipment reads SIB1 to determine that corresponding system information is cell-specific or area-specific.

If the system information is cell-specific, the terminal equipment checks whether a cell ID of a version stored in the system information is the same as a cell ID indicated by SIB 1; if no, corresponding system information is acquired. If the system information is area-specific, the terminal equipment checks whether an area ID of a system information domain of a version stored in the system information is the same as an area ID indicated by SIB1; if no, corresponding system information is acquired.

Each of the above embodiments is only illustrative for the embodiments of the present disclosure, but the present disclosure is not limited to this, appropriate modifications may be also made based on the above each embodiment. For example, each of the above embodiments may be used individually, or one or more of the above embodiments may be combined.

As may be known from the above embodiments, a first network device determines whether to stop or update or switch an AI/ML model for a signal processing function, and transmits indication information to a second network device or a terminal equipment or a core network device in a case where it is determined to stop or update or switch the AI/ML model; hence, performance of AI/ML model running may be monitored, consistency of the AI/ML model running may be maintained, and robustness of the model running may be improved.

### Embodiments of a second aspect

On the basis of the embodiments of the first aspect, the contents of model monitoring and information interaction, etc. are described below. For example, it is related to the exclusion list and the permission list mentioned above. The embodiments of the second aspect may be combined with the embodiments of the first aspect, or may be implemented separately.

In the embodiments of the present disclosure, it may be targeted at use cases such as CSI feedback, beam management, positioning, or it may be other applications that use an AI/ML model to realize air interface signal processing. Model monitoring may be performed at a terminal equipment side or at a network device side. Model monitoring may run on the same side as a model, or model monitoring may run on one side and the model runs on the opposite side.

The following text first describes a situation in which a terminal equipment performs model monitoring, a model runs for example at a network device side.

FIG. 6 is a schematic diagram of interaction between a network device and a terminal equipment in the embodiments of the present disclosure. As shown in FIG. 6, the network device receives model identification information transmitted by the terminal equipment, and model performance information and/or model operation information corresponding to the model identification information.

In some embodiments, the model performance information is generated by monitoring the AI/ML model by the terminal equipment. The terminal equipment performs the monitoring for output performance of the AI/ML model, and/or, the terminal equipment performs the monitoring for input and output data distribution of the AI/ML model.

For example, model monitoring may be performed on the output performance of the AI/ML model. It may be direct performance monitoring; for example, measurements are made via precision or performance, such as a similarity of model inputs and model outputs, accuracy of model estimation, accuracy of model prediction, and accuracy of model positioning. It may further be indirect performance monitoring; for example, it is performed according to output performance of a system after using a model, such as throughput, BLER, ACK, NACK, a receiver signal-to-noise ratio used to determine the BLER, and other information or metrics.

For another example, model monitoring may be performed for data distribution of model inputs and/or outputs, that is, monitoring is performed according to the characteristics of input and output data, such as a channel characteristic, a signal-to-noise ratio, a channel response characteristic, channel feature distribution.

In the above model monitoring, when a model monitoring result does not meet expected performance, for example accuracy of model output is not good enough, or system performance after the model is used is lower than a threshold (poor performance), or data distribution of the model input and output is inconsistent with a scope of application of the model, the model may be stopped for use, or a non-AI traditional method may be returned, or operations such as model switching may be performed.

In some embodiments, the model operation information is determined by the terminal equipment according to a monitoring result of monitoring of the AI/ML model. The monitoring result is related to the output performance of the AI/ML model or the distribution of input and output data of the AI/ML model, expressed at two or more levels.

For example, a model identifier may be assigned to a model being monitored. The model identifier may be given by a network during model registration, or may be given by a model development manufacturer. The model identifier may be unique within a cell, or unique within a network device coverage range, or unique within an operator network, or unique within a network having a specified (or prescribed) range.

For another example, for a specific functionality, such as CSI feedback information compression, beam airspace prediction, and direct positioning, there may be a plurality of models. In order to identify different models, it is necessary to acquire different identities for different models during model registration. Different models here may correspond to different scenarios, and/or, different network configurations, and/or, different positions, etc.

According to model performance monitoring, it may be defined as an event or level of model failure when model performance is poor and it is determined that the model should be discontinued; and it may be defined as an event or level of model good when model performance is good.

As shown in Table 1, for example, performance of a model may be expressed using two levels.

**Table 1**

| Model identifier | Model performance | Performance level | Examples, and meaning of the performance | Expressed by bit |
|---|---|---|---|---|
| | | Good | Model good | 1 |
| | | Bad | Model failure | 0 |

Quantitative classification of model performance may also be further carried out, such as poor performance (model performance is not acceptable, inferior to a traditional method), acceptable performance (model performance is similar to the traditional method), good performance (model performance is better than the traditional method), excellent performance (model performance is far better than the traditional method), etc.

As shown in Table 2, for example, performance of a model may be expressed using multiple levels.

**Table 2**

| Model identifier | Model performance | Performance level | Examples, and meaning of the performance | Level information | Expressed by bit |
|---|---|---|---|---|---|
| | | Excellent performance | Model performance is far better than a traditional method | 1 | 11 |
| | | Good performance | model performance is better than the traditional method | 0.75 | 10 |
| | | Performance that is acceptable | Similar to the traditional method | 0.5 | 01 |
| | | Performance that is not acceptable | Model failure | 0.25 | 00 |

Exemplary description on representation of model performance is made above, the embodiments of the present disclosure are not limited to the above classifications.

For monitoring based on the distribution of model input and output data, a data distribution measuring result of the monitored model input and output may further be graded. For example, it may be classified into two levels: special match and no match. Or, it may be classified into multiple levels: special match, general match, no match, etc. The embodiments of the present disclosure are not limited to the above classifications.

Since a model identifier is used for the model, a result of the above monitoring may be bound with the model identifier. **In** addition, the above model identifier and its corresponding model monitoring performance may be shared within a network area that maintains their identifier uniqueness, for example within a cell, within a network device coverage range, within an operator network, or within a network having a specified (or prescribed) range. For example, the exclusion list and/or the permission list as described above may be used, however the present disclosure is not limited to this; hence model monitoring history data related to the model identifier is formed.

**In** some embodiments, the model operation information includes at least one of the following: model failure information, model activation information, model deactivation information, model switching information, model continued use information, model disuse information, model rollback information, or model fail-to-recovery information.

For example, according to a model monitoring result, a network device or a terminal equipment may also make a further model operation-related decision. The decision may be to continue using the model, stop using the model, switch the model to another model, fall back to use a non-AI method, model activation, model deactivation, or model from failure to recovery, etc.

The model uses the model identifier, thus a further model operation according to the monitoring result may further be bound to the model identifier and shared in a corresponding network. For example, for an event of falling back to use a non-AI method, for a model disuse event, for a model switching event, model activation, model deactivation, model from failure to recovery, etc., sharing may be performed within a certain range.

**In** some embodiments, in addition to the model identifier, the model monitoring result information may be further bound to other identifier which may be at least one or any combination of the following: a cell identifier of a model, a model developer related identifier, a user identifier used by the model, a scenario identifier for model application, a configuration identifier for the model application, a location information identifier for the model application, version information of the model, or other category identifiers associated with the monitoring model.

Table 3 shows examples of binding other identifiers.

**Table 3**

| Model identifie r | Other model-related identifiers or identificatio n | Model performanc e | Performanc e level | Examples, and meaning of the performanc e | Level informatio n | Expresse d by bit |
|---|---|---|---|---|---|---|
| | information | | Excellent performanc e | Model performanc e is far better than a traditional method | 1 | 11 |
| | | | Good performanc e | model performanc e is better than the traditional method | 0.75 | 10 |
| | | | Performanc e that is acceptable | Similar to the traditional method | 0.5 | 01 |
| | | | Performanc e that is not acceptable | Model failure | 0.25 | 00 |

In some embodiments, the terminal equipment transmits the model identification information and the model performance information and/or model operation information corresponding to the model identification information via at least one or any combination of uplink control information (UCI), MAC CE or RRC signaling.

In some embodiments, the terminal equipment transmits the model identification information and the model performance information and/or model operation information corresponding to the model identification information via an uplink control channel and/or an uplink data channel.

In some embodiments, the network device transmits configuration information or indication information to the terminal equipment, so as to schedule the terminal equipment to transmit the model identification information and the model performance information and/or model operation information corresponding to the model identification information.

In some embodiments, the configuration information or indication information is dedicated information for the AI/ML model.

In some embodiments, the terminal equipment transmits the model identification information and the model performance information and/or model operation information corresponding to the model identification information via a periodic report, a semi-persistent report or an aperiodic report.

In some embodiments, the terminal equipment monitors the AI/ML model, and the AI/ML model is a model deployed in the first network device or a bilateral model.

In the case of model monitoring at a terminal equipment side, a network device may further request monitoring historical data.

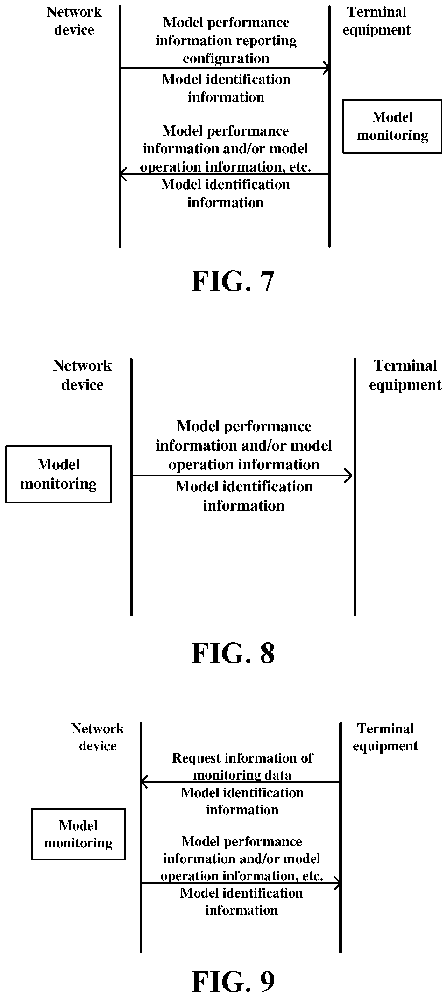

FIG. 7 is a schematic diagram of interaction between a network device and a terminal equipment in the embodiments of the present disclosure. As shown in FIG. 7, the network device transmits request information for requesting monitoring data to the terminal equipment; such as a reporting configuration that includes model identification information and model performance information as shown in FIG. 7. The terminal equipment may transmit model identification information, model performance information and/or model operation information, etc. to the network device, according to this request information.

In some embodiments, the request information includes at least one of the following: a performance indicator, a data distribution indicator, or monitored model operation information.

In some embodiments, the monitoring data is historical information, and the request information may include time range indication information.

In some embodiments, the request information includes a model identifier. The present disclosure is not limited to this, and the request information may further include other identification information corresponding to required monitoring information.

In some embodiments, a network side is configured with a terminal equipment to transmit model performance reporting for a plurality of models, including model performance information and/or model operation information, etc., or a relevant model list. The model list here records a plurality of model identifiers owned by a terminal equipment side, and corresponding model performance information and/or model operation information, etc. The list may further only record a list of models with bad performance, or a list of model failures; or only records a list of models with excellent model performance or that are often selected.

In some embodiments, a network side is configured with a terminal equipment to transmit the above reporting to a network device of a core network, such as a base station, LMF, OAM, AI/ML dedicated server, a vendor or a third-party server.

The following text then describes a situation in which a network device performs model monitoring, a model runs for example at a terminal equipment side.

FIG. 8 is a schematic diagram of interaction between a network device and a terminal equipment in the embodiments of the present disclosure. As shown in FIG. 8, the network device transmits model identification information, and model performance information and/or model operation information corresponding to the model identification information to the terminal equipment.

FIG. 8 describes by taking interaction between a network device and a terminal equipment as an example. The present disclosure is not limited to this, for example, the network device may further transmit model identification information, and model performance information and/or model operation information corresponding to the model identification information to a core network device or other network devices. In addition, corresponding contents already described in the above embodiments are omitted below.

In some embodiments, the model performance information is generated by monitoring the AI/ML model by the network device. For example, the network device performs the monitoring for output performance of the AI/ML model, and/or, the network device performs the monitoring for input and output data distribution of the AI/ML model.

In some embodiments, the model operation information is determined by the network device according to a monitoring result of monitoring of the AI/ML model.

In some embodiments, the monitoring result is related to the output performance of the AI/ML model or the distribution of input and output data of the AI/ML model, expressed at two or more levels.

In some embodiments, the model operation information includes at least one of the following: model failure information, model activation information, model deactivation information, model switching information, model continued use information, model disuse information, model rollback information, or model fail-to-recovery information.

In some embodiments, the network device transmits to the terminal equipment the model identification information and the model performance information and/or model operation information corresponding to the model identification information via at least one or any combination of downlink control information (DCI), MAC CE or RRC signaling.

In some embodiments, the network device transmits to the terminal equipment the model identification information and the model performance information and/or model operation information corresponding to the model identification information via a downlink control channel and/or a downlink data channel.

In some embodiments, the network device monitors the AI/ML model, and the AI/ML model is a model deployed in the terminal equipment or a bilateral model.

In the case of model monitoring at a network device side, a terminal equipment may further request monitoring historical data.

FIG. 9 is a schematic diagram of interaction between a network device and a terminal equipment in the embodiments of the present disclosure. As shown in FIG. 9, the network device receives request information for requesting monitoring data, transmitted by the terminal equipment. The network device may transmit model identification information, model performance information and/or model operation information, etc. to the terminal equipment, according to this request information.

In some embodiments, the request information includes at least one of the following: a performance indicator, a data distribution indicator, or monitored model operation information.

In some embodiments, the monitoring data is historical information, and the request information includes time range indication information.

In some embodiments, the request information includes a model identifier. The present disclosure is not limited to this, and the request information may further include other identification information corresponding to required monitoring information.

The above text schematically describes model monitoring, model performance information and/or model operation information, and the following text schematically describes indicator information related to model monitoring and/or model operation decision information. The following contents may be implemented in conjunction with any of the above embodiments or may be implemented separately.

In some embodiments, the network device transmits indicator information related to model monitoring and/or model operation decision information based on model monitoring to the terminal equipment.

For example, the indicator information related to model monitoring includes at least one of the following: performance indicator information related to model output, data distribution indicator information related to the model output, or data distribution indicator information related to model input. The present disclosure is not limited to this, for example, and the indicator information may further include other indicator information. The indicator information related to model monitoring may be model identifier dedicated information, or may further be model monitoring common information.

For example, the model operation decision information based on model monitoring includes at least one of the following: relevant information on deciding model deactivation, relevant information on deciding model rollback, relevant information on deciding model switching, relevant information on deciding model stop, relevant information on determining model failure, relevant information on deciding a model from stop to enablement, or relevant information on deciding model update. The present disclosure is not limited to this, for example, and the model operation decision information may further include other information. The model operation decision information based on model monitoring may be model identifier dedicated information, or may further be model monitoring common information.

In some embodiments, a network device and/or a terminal equipment operate(s) the model according to a result of model monitoring.

For example, after the terminal equipment decides to perform the operation, it may directly perform a corresponding operation.

For another example, the terminal equipment decides an operation on the model according to a result of model monitoring and reports the operation to the network device; after receiving a confirmation instruction from the network device, the terminal equipment performs the operation on the model.

For another example, the terminal equipment decides an operation on the model according to a result of model monitoring and reports the operation to the network device, the network device performs the operation on the model.

The above text schematically describes indicator information related to model monitoring and/or model operation decision information, and the following text schematically describes model inquiry information and model feedback information. The following contents may be implemented in conjunction with any of the above embodiments or may be implemented separately.

For example, a terminal equipment side monitors input information of a model; when the input information is found to be very different from features of model input information used in model training, the terminal equipment may suggest or tell a network device side to stop using the model. Or, the terminal equipment side monitors input information of a model; when the input information is found to be very different from features of model input information used in model training, but is close to features of input information used in the training of another model, the terminal equipment may suggest or tell the network device side to switch to the another model.

For example, the model may be a bilateral model, or may further be a terminal-equipment-side model. The network device side may perform corresponding operations, such as deactivation, or model rollback, or model switching, or confirmation of the model switching, according to information transmitted by the terminal equipment.

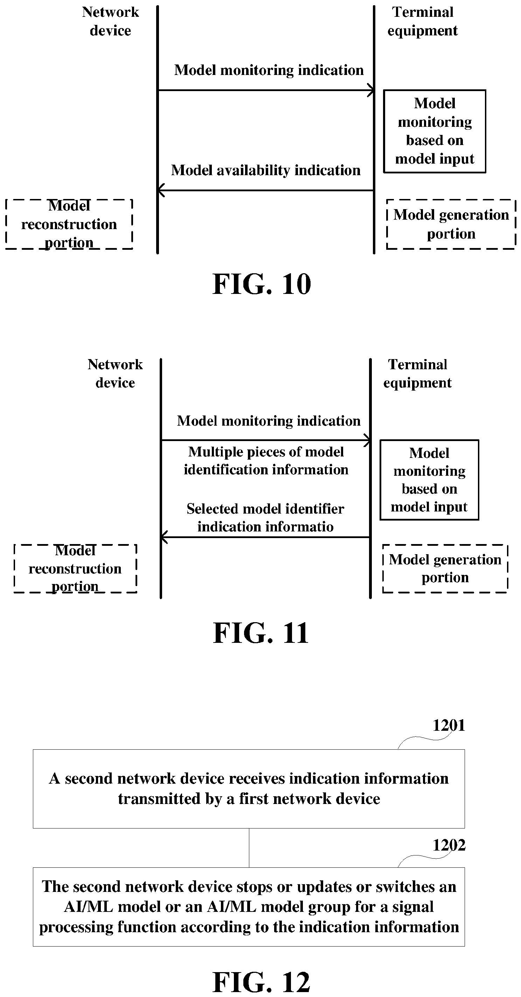

FIG. 10 is a schematic diagram of interaction between a network device and a terminal equipment in the embodiments of the present disclosure. As shown in FIG. 10, the network device transmits model inquiry information (such as the model monitoring indication shown in FIG. 10) to the terminal equipment, the model inquiry information including a model identifier. The network device receives model feedback information (such as the model availability indication shown in FIG. 10) transmitted by the terminal equipment, and performs corresponding operations on the AI/ML model according to the model feedback information.

In some embodiments, the model feedback information includes at least one of the following: AI/ML model availability information corresponding to the model identifier, AI/ML model deactivation information corresponding to the model identifier, AI/ML model rollback information corresponding to the model identifier, or AI/ML model failure information corresponding to the model identifier.

In some embodiments, the network device continues to use an AI/ML model corresponding to the model identifier, or, activates the AI/ML model corresponding to the model identifier, or, deactivates the AI/ML model corresponding to the model identifier.

For example, the network device activates use of a model at a terminal equipment side after receiving a response that the model of the terminal equipment may run. Under this circumstance, the network device side only lets the terminal equipment determine whether the model may be used for a certain terminal equipment for which both parties have reached a consensus on, assuming that the terminal equipment may determine whether the model is available according to inputs of the model.

FIG. 11 is a schematic diagram of interaction between a network device and a terminal equipment in the embodiments of the present disclosure. As shown in FIG. 11, the network device transmits model inquiry information (such as the model monitoring indication shown in FIG. 11) to the terminal equipment, the model inquiry information including a plurality of model identifiers. The network device receives model feedback information (such as the selected model indication information shown in FIG. 11) transmitted by the terminal equipment, and performs corresponding operations on the AI/ML model according to the model feedback information.

In some embodiments, the model inquiry information includes a plurality of model identifiers; the model feedback information includes a model identifier selected by the terminal equipment from the plurality of model identifiers. The network device activates an AI/ML model corresponding to the selected model identifier.

In some embodiments, a network side only performs configuration or commands a terminal side to perform model selection, the terminal equipment makes model selection according to a configuration or command from the network side and based on features of a signal (such as a model input related RS signal, e.g. CSI-RS, or PRS) transmitted by the network side, and transmits identification information of one or several selected models back to the network side. According to a configuration of a base station, the information transmitted back may further contain corresponding monitoring performance information.

For example, the network device transmits model inquiry information to the terminal equipment, which contains related multiple pieces of model identification information; the network device receives the model identification information reported by the terminal equipment according to an inquiry. The network device side activates a model corresponding to the model identifier. Under this circumstance, the network device side asks the terminal equipment to select a model according to features of an input signal, and after selecting, the terminal equipment tells the network device, the network device side enables a related model.

For example, the model inquiry and model feedback mentioned above may mainly aim at bilateral models, and model selection or model determination may be based on distribution features of input data.

For example, as shown in FIGS. 10 and 11, the network device and the terminal equipment may have a model generation portion and a model reconstruction portion, respectively, thereby forming a bilateral model. Thus, after one side determines whether the model is enabled/stopped, the other side needs to be informed.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

### Embodiments of a third aspect

The embodiments of the present disclosure provide an information processing method, which is described from a second network device side, the contents same as the embodiments of the first and second aspects are not repeated.

FIG. 12 is a schematic diagram of an information processing method in the embodiments of the present disclosure. As shown in FIG. 12, the method includes:
1201, a second network device receives indication information transmitted by a first network device; and
1202, the second network device stops or updates or switches an AI/ML model or an AI/ML model group for a signal processing function according to the indication information.

It should be noted that the above FIG. 12 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 12.

In some embodiments, the first network device transmits first indication information for stopping the AI/ML model, to the second network device via an Xn interface.

In some embodiments, the first indication information is carried by an XnAP message, the XnAP message including a configuration update message, an Xn setup message or a resource state update message.

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

In some embodiments, the first indication information is used by the second network device to determine whether to stop an AI/ML model in the second network device, and/or, determine whether to stop an AI/ML model in a terminal equipment within a cell.

In some embodiments, in a case where at least one piece of the identification information of the signal processing function to which the AI/ML model in the second network device corresponds, the identification information of the AI/ML model, or the version information of the AI/ML model is in consistence with the first indication information, the second network device determines to stop the AI/ML model in the second network device; and/or
in a case where at least one piece of the identification information of the signal processing function to which the AI/ML model in a terminal equipment within the cell corresponds, the identification information of the AI/ML model, or the version information of the AI/ML model is in consistence with the first indication information, the second network device notifies the terminal equipment to stop the AI/ML model in the terminal equipment.

In some embodiments, the second network device transmits a confirmation message or a rejection message or a failure message to the first network device.

In some embodiments, the first network device transmits second indication information for updating the AI/ML model, to the second network device via an Xn interface.

In some embodiments, the second indication information is carried by an XnAP message, the XnAP message including a configuration update message, an Xn setup message or a resource state update message.

In some embodiments, the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

In some embodiments, the second indication information is used by the second network device to determine whether to update an AI/ML model in the second network device, and/or, determine whether to update an AI/ML model in a terminal equipment within a cell.

In some embodiments, in a case where the identification information of the signal processing function to which the AI/ML model in the second network device corresponds is in consistence with the second indication information and the identification information of the AI/ML model is not in consistence with the second indication information and/or the version information of the AI/ML model is lower than the version information of the AI/ML model in the second indication information, the second network device determines to update the AI/ML model in the second network device; and/or
in a case where the identification information of the signal processing function to which the AI/ML model in the terminal equipment within the cell corresponds is in consistence with the second indication information and the identification information of the AI/ML model is not in consistence with the second indication information and/or the version information of the AI/ML model is lower than the version information of the AI/ML model in the second indication information, the second network device notifies the terminal equipment to update the AI/ML model in the terminal equipment.

In some embodiments, the second network device transmits a confirmation message or a rejection message or a failure message to the first network device.

In some embodiments, the second network device further receives an exclusion list and/or a permission list transmitted by the first network device.

In some embodiments, the second network device receives model identification information, and model performance information and/or model operation information corresponding to the model identification information, transmitted by the first network device.

In some embodiments, the model performance information is generated by monitoring the AI/ML model by the first network device. The first network device performs the monitoring for output performance of the AI/ML model, and/or, the first network device performs the monitoring for input and output data distribution of the AI/ML model.

In some embodiments, the model operation information is determined by the first network device according to a monitoring result of monitoring of the AI/ML model. The monitoring result is related to the output performance of the AI/ML model or the distribution of input and output data of the AI/ML model, expressed at two or more levels.

In some embodiments, the model operation information includes at least one of the following: model failure information, model activation information, model deactivation information, model switching information, model continued use information, model disuse information, model rollback information, or model fail-to-recovery information.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, the second network device receives indication information transmitted by the first network device; and stops or updates or switches an AI/ML model for a signal processing function according to the indication information; hence, performance of AI/ML model running may be monitored, consistency of the AI/ML model running may be maintained, and robustness of the model running may be improved.

### Embodiments of a fourth aspect

The embodiments of the present disclosure provide an information processing method, which is described from a core network device side, the contents same as the embodiments of the first and second aspects are not repeated.

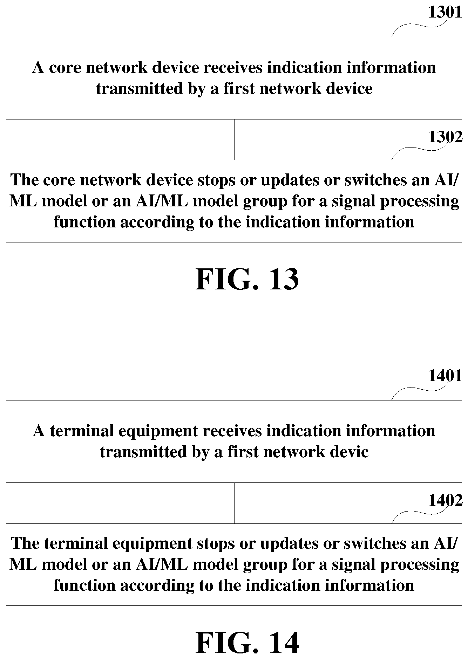

FIG. 13 is a schematic diagram of an information processing method in the embodiments of the present disclosure. As shown in FIG. 13, the method includes:
1301, a core network device receives indication information transmitted by a first network device; and
1302, the core network device stops or updates or switches an AI/ML model or an AI/ML model group for a signal processing function according to the indication information.

It should be noted that the above FIG. 13 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 13.

In some embodiments, the first network device transmits first indication information for stopping the AI/ML model, to the core network device via an NG interface.

In some embodiments, the first indication information is carried by an NGAP message, the NGAP message including an RAN configuration update message, an NG setup message, an Xn setup message or an RAN configuration transfer message.

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

In some embodiments, the first indication information is used by the core network device to determine whether to stop an AI/ML model in a network device and/or a terminal equipment within an area.

In some embodiments, in a case where at least one piece of the identification information of the signal processing function to which the AI/ML model in a network device within the area corresponds, the identification information of the AI/ML model, or the version information of the AI/ML model is in consistence with the first indication information, the core network device notifies the network device to stop the AI/ML model in the network device via an NGAP message; and/or
in a case where at least one piece of the identification information of the signal processing function to which the AI/ML model in a terminal equipment within the area corresponds, the identification information of the AI/ML model, or the version information of the AI/ML model is in consistence with the first indication information, the core network device notifies the terminal equipment to stop the AI/ML model in the terminal equipment via an NAS message.

In some embodiments, the core network device transmits a confirmation message or a rejection message or a failure message to the first network device.

In some embodiments, the first network device transmits second indication information for updating the AI/ML model, to the core network device via an NG interface.

In some embodiments, the second indication information is carried by an NGAP message, the NGAP message including an RAN configuration update message, an NG setup message, an Xn setup message or an RAN configuration transfer message.

In some embodiments, the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

In some embodiments, the second indication information is used by the core network device to determine whether to update an AI/ML model in a network device and/or a terminal equipment within an area.

In some embodiments, in a case where the identification information of the signal processing function to which the AI/ML model in the network device within the area corresponds is in consistence with the second indication information and the identification information of the AI/ML model is not in consistence with the second indication information and/or the version information of the AI/ML model is lower than the version information of the AI/ML model in the second indication information, the core network notifies the network device via an NGAP message to update the AI/ML model in the network device; and/or
in a case where the identification information of the signal processing function to which the AI/ML model in the terminal equipment within the area corresponds is in consistence with the second indication information and the identification information of the AI/ML model is not in consistence with the second indication information and/or the version information of the AI/ML model is lower than the version information of the AI/ML model in the second indication information, the core network device notifies the terminal equipment via an NAS message to update the AI/ML model in the terminal equipment.

In some embodiments, the core network device transmits a confirmation message or a rejection message or a failure message to the first network device.

In some embodiments, the core network device further receives an exclusion list and/or a permission list transmitted by the first network device.

In some embodiments, the core network device receives model identification information transmitted by the first network device, and model performance information and/or model operation information corresponding to the model identification information.

In some embodiments, the model performance information is generated by monitoring the AI/ML model by the first network device. The first network device performs the monitoring for output performance of the AI/ML model, and/or, the first network device performs the monitoring for input and output data distribution of the AI/ML model.

In some embodiments, the model operation information is determined by the first network device according to a monitoring result of monitoring of the AI/ML model. The monitoring result is related to the output performance of the AI/ML model or the distribution of input and output data of the AI/ML model, expressed at two or more levels.

In some embodiments, the model operation information includes at least one of the following: model failure information, model activation information, model deactivation information, model switching information, model continued use information, model disuse information, model rollback information, or model fail-to-recovery information.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, the core network device receives indication information transmitted by the first network device; and stops or updates or switches an AI/ML model for a signal processing function according to the indication information; hence, performance of AI/ML model running may be monitored, consistency of the AI/ML model running may be maintained, and robustness of the model running may be improved.

### Embodiments of a fifth aspect

The embodiments of the present disclosure provide an information processing method, which is described from a terminal equipment side, the contents same as the embodiments of the first and second aspects are not repeated.

FIG. 14 is a schematic diagram of an information processing method in the embodiments of the present disclosure. As shown in FIG. 14, the method includes:
1401, a terminal equipment receives indication information transmitted by a first network device; and
1402, the terminal equipment stops or updates or switches an AI/ML model or an AI/ML model group for a signal processing function according to the indication information.

It should be noted that the above FIG. 14 is only schematic description of the embodiments of the present disclosure, but the present disclosure is not limited to this. For example, an execution step of each operation may be adjusted appropriately, moreover other some operations may be increased or reduced. Persons skilled in the art may make appropriate modifications according to the above contents, not limited to the records in the above FIG. 14.

In some embodiments, the first network device transmits first indication information for stopping the AI/ML model to one or more terminal equipments in a cell or an area via system information and/or a paging message.

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

In some embodiments, the first indication information is used by the terminal equipment to determine whether to stop an AI/ML model in the terminal equipment.

In some embodiments, in a case where at least one piece of the identification information of the signal processing function to which the AI/ML model in the terminal equipment corresponds, the identification information of the AI/ML model, or the version information of the AI/ML model is in consistence with the first indication information, the terminal equipment determines to stop the AI/ML model in the terminal equipment.

In some embodiments, the first network device transmits second indication information for updating the AI/ML model to one or more terminal equipments in a cell or an area via system information and/or a paging message.

In some embodiments, the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

In some embodiments, the second indication information is used by the terminal equipment to determine whether to update an AI/ML model in the terminal equipment.

In some embodiments, in a case where the identification information of the signal processing function to which the AI/ML model in the terminal equipment corresponds is in consistence with the second indication information and the identification information of the AI/ML model is not in consistence with the second indication information and/or the version information of the AI/ML model is lower than the version information of the AI/ML model in the second indication information, the terminal equipment determines to update the AI/ML model in the terminal equipment.

In some embodiments, a terminal equipment in an inactive state acquires the identification information of the AI/ML model and/or the version information of the AI/ML model from system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.

In some embodiments, the terminal equipment downloads the updated AI/ML model from a cell, or loads the updated AI/ML model from a memory, or acquires the updated AI/ML model from the system information.

In some embodiments, a terminal equipment in an active state acquires the identification information of the AI/ML model and/or the version information of the AI/ML model from a target cell, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.

In some embodiments, the terminal equipment downloads the updated AI/ML model from the target cell, or loads the updated AI/ML model from a memory, or acquires the updated AI/ML model from the system information.

In some embodiments, the terminal equipment transmits a request to the first network device; and the terminal equipment receives system information related to the AI/ML model.

In some embodiments, the terminal equipment acquires the identification information of the AI/ML model and/or the version information of the AI/ML model from the system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.

In some embodiments, the system information is cell-specific or area-specific.

In some embodiments, the terminal equipment further receives an exclusion list and/or a permission list transmitted by the first network device.

In some embodiments, the terminal equipment transmits to the network device model identification information, and model performance information and/or model operation information corresponding to the model identification information.

In some embodiments, the model performance information is generated by monitoring the AI/ML model by the terminal equipment. The terminal equipment performs the monitoring for output performance of the AI/ML model, and/or, the terminal equipment performs the monitoring for input and output data distribution of the AI/ML model.

In some embodiments, the model operation information is determined by the terminal equipment according to a monitoring result of monitoring of the AI/ML model. The monitoring result is related to the output performance of the AI/ML model or the distribution of input and output data of the AI/ML model, expressed at two or more levels.

In some embodiments, the model operation information includes at least one of the following: model failure information, model activation information, model deactivation information, model switching information, model continued use information, model disuse information, model rollback information, or model fail-to-recovery information.

In some embodiments, the terminal equipment transmits the model identification information and the model performance information and/or model operation information corresponding to the model identification information via at least one or any combination of uplink control information (UCI), MAC CE or RRC signaling.

In some embodiments, the terminal equipment transmits the model identification information and the model performance information and/or model operation information corresponding to the model identification information via an uplink control channel and/or an uplink data channel.

In some embodiments, the terminal equipment receives configuration information or indication information transmitted by the network device, and the terminal equipment transmits the model identification information and the model performance information and/or model operation information corresponding to the model identification information.

In some embodiments, the configuration information or indication information is dedicated information for the AI/ML model.

In some embodiments, the terminal equipment transmits the model identification information and the model performance information and/or model operation information corresponding to the model identification information via a periodic report, a semi-persistent report or a non-periodic report.

In some embodiments, the terminal equipment monitors the AI/ML model, and the AI/ML model is a model deployed in the first network device or a bilateral model.

In some embodiments, the terminal equipment receives request information for requesting monitoring data, transmitted by the network device.

In some embodiments, the request information includes at least one of the following: a performance indicator, a data distribution indicator, or monitored model operation information.

In some embodiments, the monitoring data is historical information, and the request information includes time range indication information.

In some embodiments, the request information includes a model identifier.

In some embodiments, the terminal equipment receives model identification information, and model performance information and/or model operation information corresponding to the model identification information, transmitted by the network device.

In some embodiments, the model performance information is generated by monitoring the AI/ML model by the network device. The network device performs the monitoring for output performance of the AI/ML model, and/or, the network device performs the monitoring for input and output data distribution of the AI/ML model.

In some embodiments, the model operation information is determined by the network device according to a monitoring result of monitoring of the AI/ML model. The monitoring result is related to the output performance of the AI/ML model or the distribution of input and output data of the AI/ML model, expressed at two or more levels.

In some embodiments, the model operation information includes at least one of the following: model failure information, model activation information, model deactivation information, model switching information, model continued use information, model disuse information, model rollback information, or model fail-to-recovery information.

In some embodiments, the network device transmits the model identification information and the model performance information and/or model operation information corresponding to the model identification information to the terminal equipment via at least one or any combination of downlink control information (DCI), MAC CE or RRC signaling.

In some embodiments, the network device transmits the model identification information and the model performance information and/or model operation information corresponding to the model identification information to the terminal equipment via a downlink control channel and/or a downlink data channel.

In some embodiments, the network device monitors the AI/ML model, and the AI/ML model is a model deployed in the terminal equipment or a bilateral model.

In some embodiments, the terminal equipment transmits request information for requesting monitoring data to the network device. The request information includes at least one of the following: a performance indicator, a data distribution indicator, or monitored model operation information.

In some embodiments, the monitoring data is historical information, and the request information includes time range indication information.

In some embodiments, the request information includes a model identifier.

In some embodiments, the terminal equipment receives indicator information related to model monitoring and/or model operation decision information based on model monitoring, transmitted by the network device.

In some embodiments, the indicator information related to model monitoring includes at least one of the following: performance indicator information related to model output, data distribution indicator information related to the model output, or data distribution indicator information related to model input.

In some embodiments, the indicator information related to model monitoring is model identifier dedicated information, or is model monitoring common information.

In some embodiments, the model operation decision information based on model monitoring includes at least one of the following: relevant information on deciding model deactivation, relevant information on deciding model rollback, relevant information on deciding model switching, relevant information on deciding model stop, relevant information on determining model failure, relevant information on deciding a model from stop to enablement, or relevant information on deciding model update.

In some embodiments, the model operation decision information based on model monitoring is model identifier dedicated information, or is model monitoring common information.

In some embodiments, the network device and/or the terminal equipment operate(s) the model according to a result of model monitoring.

In some embodiments, the terminal equipment decides an operation on the model according to a result of model monitoring and reports the operation to the network device; after receiving a confirmation instruction from the network device, the terminal equipment performs the operation on the model.

In some embodiments, the terminal equipment decides an operation on the model according to a result of model monitoring and reports the operation to the network device, the network device performs the operation on the model.

In some embodiments, the terminal equipment receives model inquiry information transmitted by the network device; and transmits model feedback information to the network device, and the network device performs corresponding operations on the AI/ML model according to the model feedback information.

In some embodiments, the model inquiry information includes a model identifier; the model feedback information includes at least one of the following: AI/ML model availability information corresponding to the model identifier, AI/ML model deactivation information corresponding to the model identifier, AI/ML model rollback information corresponding to the model identifier, or AI/ML model failure information corresponding to the model identifier.

In some embodiments, the network device continues to use an AI/ML model corresponding to the model identifier, or, activates the AI/ML model corresponding to the model identifier, or, deactivates the AI/ML model corresponding to the model identifier.

In some embodiments, the model inquiry information includes a plurality of model identifiers; the model feedback information includes a model identifier selected by the terminal equipment from the plurality of model identifiers.

In some embodiments, the network device activates an AI/ML model corresponding to the selected model identifier.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

As may be known from the above embodiments, the terminal equipment receives indication information transmitted by the first network device; and stops or updates or switches an AI/ML model for a signal processing function according to the indication information; hence, performance of AI/ML model running may be monitored, consistency of the AI/ML model running may be maintained, and robustness of the model running may be improved.

### Embodiments of a sixth aspect

Embodiments of the present disclosure provide an information indication apparatus. The device e.g. may be a network device (such as the above mentioned first network device), or it may be one or more parts or components configured in the network device. The contents same as the embodiments of the first and second aspects are not repeated.

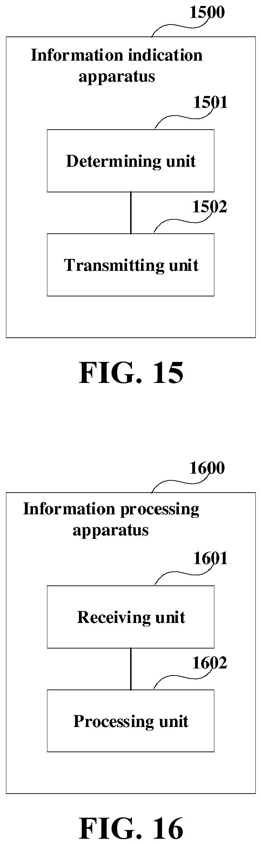

FIG. 15 is a schematic diagram of an information indication apparatus in the embodiments of the present disclosure. As shown in FIG. 15, an information indication apparatus 1500 includes:
a determining unit 1501 configured to determine whether to stop or update or switch an AI/ML model or an AI/ML model group for a signal processing function; and
a transmitting unit 1502 configured to transmit indication information to a second network device or a terminal equipment or a core network device in a case where it is determined to stop or update or switch the AI/ML model or the AI/ML model group.

In some embodiments, first indication information for stopping the AI/ML model or the AI/ML model group, and/or second indication information for updating the AI/ML model or the AI/ML model group, is/are transmitted to the second network device via an Xn interface.

In some embodiments, the first indication information is carried by an XnAP message, the XnAP message including a configuration update message, an Xn setup message or a resource state update message;
the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

In some embodiments, the first indication information is used by the second network device to determine whether to stop an AI/ML model in the second network device, and/or, determine whether to stop an AI/ML model in a terminal equipment within a cell,
wherein in a case where at least one piece of the identification information of the signal processing function to which the AI/ML model in the second network device corresponds, the identification information of the AI/ML model, or the version information of the AI/ML model is in consistence with the first indication information, the second network device determines to stop the AI/ML model in the second network device; and/or
in a case where at least one piece of the identification information of the signal processing function to which the AI/ML model in a terminal equipment within the cell corresponds, the identification information of the AI/ML model, or the version information of the AI/ML model is in consistence with the first indication information, the second network device notifies the terminal equipment to stop the AI/ML model in the terminal equipment.

In some embodiments, the second indication information is carried by an XnAP message, the XnAP message including a configuration update message, an Xn setup message or a resource state update message,
wherein the second indication information includes at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

In some embodiments, the second indication information is used by the second network device to determine whether to update an AI/ML model in the second network device, and/or, determine whether to update an AI/ML model in a terminal equipment within a cell,
wherein in a case where the identification information of the signal processing function to which the AI/ML model in the second network device corresponds is in consistence with the second indication information and the identification information of the AI/ML model is not in consistence with the second indication information and/or the version information of the AI/ML model is lower than the version information of the AI/ML model in the second indication information, the second network device determines to update the AI/ML model in the second network device; and/or
in a case where the identification information of the signal processing function to which the AI/ML model in the terminal equipment within the cell corresponds is in consistence with the second indication information and the identification information of the AI/ML model is not in consistence with the second indication information and/or the version information of the AI/ML model is lower than the version information of the AI/ML model in the second indication information, the second network device notifies the terminal equipment to update the AI/ML model in the terminal equipment.

In some embodiments, first indication information for stopping the AI/ML model, and/or second indication information for updating the AI/ML model, is/are transmitted to the core network device via an NG interface.

In some embodiments, the first indication information is carried by an NGAP message, the NGAP message including an RAN configuration update message, an NG setup message, an Xn setup message or an RAN configuration transfer message;
the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

In some embodiments, the first indication information is used by the core network device to determine whether to stop an AI/ML model in a network device and/or a terminal equipment within an area,
wherein in a case where at least one piece of the identification information of the signal processing function to which the AI/ML model in a network device within the area corresponds, the identification information of the AI/ML model, or the version information of the AI/ML model is in consistence with the first indication information, the core network device notifies the network device to stop the AI/ML model in the network device via an NGAP message; and/or
in a case where at least one piece of the identification information of the signal processing function to which the AI/ML model in a terminal equipment within the area corresponds, the identification information of the AI/ML model, or the version information of the AI/ML model is in consistence with the first indication information, the core network device notifies the terminal equipment to stop the AI/ML model in the terminal equipment via an NAS message.

In some embodiments, the second indication information is carried by an NGAP message, the NGAP message including an RAN configuration update message, an NG setup message, an Xn setup message or an RAN configuration transfer message;
the second indication information includes at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

In some embodiments, the second indication information is used by the core network device to determine whether to update an AI/ML model in a network device and/or a terminal equipment within an area,
wherein in a case where the identification information of the signal processing function to which the AI/ML model in the network device within the area corresponds is in consistence with the second indication information and the identification information of the AI/ML model is not in consistence with the second indication information and/or the version information of the AI/ML model is lower than the version information of the AI/ML model in the second indication information, the core network notifies the network device via an NGAP message to update the AI/ML model in the network device; and/or
in a case where the identification information of the signal processing function to which the AI/ML model in the terminal equipment within the area corresponds is in consistence with the second indication information and the identification information of the AI/ML model is not in consistence with the second indication information and/or the version information of the AI/ML model is lower than the version information of the AI/ML model in the second indication information, the core network device notifies the terminal equipment via an NAS message to update the AI/ML model in the terminal equipment.

In some embodiments, the first network device transmits first indication information for stopping the AI/ML model, and/or, second indication information for updating the AI/ML model to one or more terminal equipments in a cell or an area via system information and/or a paging message.

In some embodiments, the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

In some embodiments, the first indication information is used by the terminal equipment to determine whether to stop an AI/ML model in the terminal equipment,
wherein in a case where at least one piece of the identification information of the signal processing function to which the AI/ML model in the terminal equipment corresponds, the identification information of the AI/ML model, or the version information of the AI/ML model is in consistence with the first indication information, the terminal equipment determines to stop the AI/ML model in the terminal equipment.

In some embodiments, the second indication information includes at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

In some embodiments, the second indication information is used by the terminal equipment to determine whether to update an AI/ML model in the terminal equipment,
wherein in a case where the identification information of the signal processing function to which the AI/ML model in the terminal equipment corresponds is in consistence with the second indication information and the identification information of the AI/ML model is not in consistence with the second indication information and/or the version information of the AI/ML model is lower than the version information of the AI/ML model in the second indication information, the terminal equipment determines to update the AI/ML model in the terminal equipment.

In some embodiments, a terminal equipment in an inactive state acquires the identification information of the AI/ML model and/or the version information of the AI/ML model from system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment,
wherein the terminal equipment downloads the updated AI/ML model from a cell, or loads the updated AI/ML model from a memory, or acquires the updated AI/ML model from the system information.

In some embodiments, a terminal equipment in an active state acquires the identification information of the AI/ML model and/or the version information of the AI/ML model from a target cell, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment,
wherein the terminal equipment downloads the updated AI/ML model from the target cell, or loads the updated AI/ML model from a memory, or acquires the updated AI/ML model from the system information.

In some embodiments, a first network transmits a model exclusion list and/or a model permission list, or model identification information, and model performance information and/or model operation information corresponding to the model identification information to other network element such as LMF, OAM, etc. of the core network. Or, the network element such as LMF transmits a model exclusion list and/or model a permission list, or model identification information, and model performance information and/or model operation information corresponding to the model identification information to other network element, including a first network device.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The information indication apparatus 1500 may further include other components or modules. For detailed contents of these components or modules, relevant technologies may be referred to.

Moreover, for the sake of simplicity, FIG. 15 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, a first network device determines whether to stop or update or switch an AI/ML model for a signal processing function, and transmits indication information to a second network device or a terminal equipment or a core network device in a case where it is determined to stop or update or switch the AI/ML model; hence, performance of AI/ML model running may be monitored, consistency of the AI/ML model running may be maintained, and robustness of the model running may be improved.

### Embodiments of a seventh aspect

Embodiments of the present disclosure provide an information processing apparatus. The device e.g. may be a network device (such as the above mentioned second network device) or a core network device or a terminal equipment, or it may be one or more parts or components configured in the network device or the core network device or the terminal equipment. The contents same as the embodiments of the third to fifth aspects are not repeated.

FIG. 16 is a schematic diagram of an information processing apparatus in the embodiments of the present disclosure. As shown in FIG. 16, an information processing apparatus 1600 includes:
a receiving unit 1601 configured to receive indication information transmitted by a first network device; and
a processing unit 1602 configured to stop or update or switch an AI/ML model or an AI/ML model group for a signal processing function according to the indication information.

Each of the above embodiments is only illustrative for the embodiments of the present disclosure, but the present disclosure is not limited to this, appropriate modifications may be further made based on the above each embodiment. For example, each of the above embodiments may be used individually, or one or more of the above embodiments may be combined.

It is worth noting that the above only describes components or modules related to the present disclosure, but the present disclosure is not limited to this. The information processing apparatus 1600 may further include other components or modules. For detailed contents of these components or modules, relevant technologies may be referred to.

Moreover, for the sake of simplicity, FIG. 16 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

As may be known from the above embodiments, indication information transmitted by the first network device is received; and an AI/ML model for a signal processing function is stopped or updated or switched according to the indication information; hence, performance of AI/ML model running may be monitored, consistency of the AI/ML model running may be maintained, and robustness of the model running may be improved.

### Embodiments of an eighth aspect

The embodiments of the present disclosure further provide a communication system, FIG.1 may be referred to, the contents same as the embodiments of the first to seventh aspects are not repeated.

In some embodiments, the communication system 100 at least may include:
a network device 101 configured to determine whether to stop or update or switch an AI/ML model or an AI/ML model group for a signal processing function, and transmit indication information to a second network device or a terminal equipment or a core network device in a case where it is determined to stop or update or switch the AI/ML model or the AI/ML model group.

The embodiments of the present disclosure further provide a network device or a core network device, for example may be a base station, but the present disclosure is not limited to this, and the network device or the core network device may also be other network device or core network device respectively.

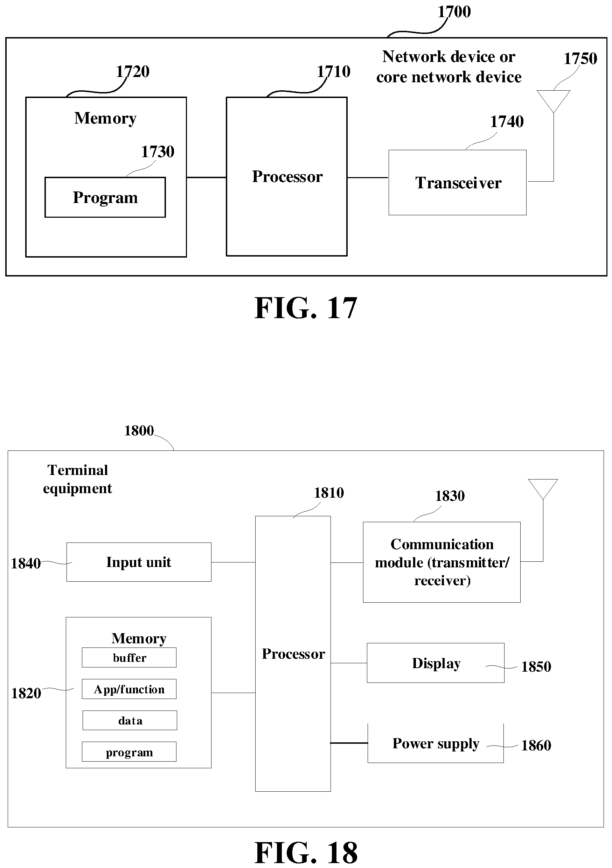

FIG. 17 is a schematic diagram of composition of a network device or core network device in the embodiments of the present disclosure. As shown in FIG. 17, the network device or core network device 1700 may include: a processor 1710 (such as a central processing unit (CPU)) and a memory 1720; the memory 1720 is coupled to the processor 1710. The memory 1720 may store various data; moreover, also stores a program 1730 for information processing, and executes the program 1730 under the control of the processor 1710.

For example, the processor 1710 may be configured to execute a program to implement the information indication method as described in the embodiments of the first aspect. For example, the processor 1710 may be configured to perform the following control: determine whether to stop or update or switch an AI/ML model or an AI/ML model group for a signal processing function, and transmit indication information to a second network device or a terminal equipment or a core network device in a case where it is determined to stop or update or switch the AI/ML model or the AI/ML model group.

For example, the processor 1710 may be configured to execute a program to implement the information processing method as described in the embodiments of the second to fourth aspects. For example, the processor 1710 may be configured to perform the following control: receive indication information transmitted by the first network device; stop or update or switch an AI/ML model or an AI/ML model group for a signal processing function according to the indication information.

In addition, as shown in FIG. 17, the network device or core network device 1700 may further include: a transceiver 1740 and an antenna 1750, etc., wherein the functions of said components are similar to relevant arts, which are not repeated here. It's worth noting that the network device or core network device 1700 does not have to include all the components shown in FIG. 17. Moreover, the network device or core network device 1700 may further include components not shown in FIG. 17, relevant arts may be referred to.

The embodiments of the present disclosure further provide a terminal equipment, but the present disclosure is not limited to this, and the terminal equipment may also be other device.

FIG. 18 is a schematic diagram of a terminal equipment in the embodiments of the present disclosure. As shown in FIG. 18, the terminal equipment 1800 may include a processor 1810 and a memory 1820; the memory 1820 stores data and programs, and is coupled to the processor 1810. It's worth noting that this figure is exemplary; other types of structures can also be used to supplement or replace this structure, so as to realize a telecommunication function or other functions.

For example, the processor 1810 may be configured to execute a program to implement the information processing method as described in the embodiments of the fifth aspect. For example, the processor 1810 may be configured to perform the following control: receive indication information transmitted by the first network device; stop or update or switch an AI/ML model or an AI/ML model group for a signal processing function according to the indication information.

As shown in FIG. 18, the terminal equipment 1800 may further include: a communication module 1830, an input unit 1840, a display 1850 and a power supply 1860. The functions of said components are similar to relevant arts, which are not repeated here. It's worth noting that the terminal equipment 1800 does not have to include all the components shown in FIG. 18, said components are not indispensable. Moreover, the terminal equipment 1800 may also include components not shown in FIG. 18, relevant arts can be referred to.

The embodiments of the present disclosure further provide a computer program, wherein when a terminal device executes the program, the program enables the terminal device to execute the information processing method described in the embodiments of the fifth aspect.

The embodiments of the present disclosure further provide a storage medium in which a computer program is stored, wherein the computer program enables a terminal equipment to execute the information processing method described in the embodiments of the fifth aspect.

The embodiments of the present disclosure further provide a computer program, wherein when a network device or core network device executes the program, the program enables the network device or core network device to execute the information indication method described in the embodiments of the first aspect or the information processing method described in the embodiments of the second to fourth aspects.

The embodiments of the present disclosure further provide a storage medium in which a computer program is stored, wherein the computer program enables a network device or core network device to execute the information indication method described in the embodiments of the first aspect or the information processing method described in the embodiments of the second to fourth aspects.

The device and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:
1. An information indication method, including:
   a first network device determines whether to stop or update or switch an AI/ML model or an AI/ML model group for a signal processing function; and
   transmits indication information to a second network device or a terminal equipment or a core network device in a case where it is determined to stop or update or switch the AI/ML model or the AI/ML model group.
2. The method according to Supplement 1, wherein the first network device transmits first indication information for stopping the AI/ML model or AI/ML model group, to the second network device via an Xn interface.
3. The method according to Supplement 2, wherein the first indication information is carried by an XnAP message, the XnAP message including a configuration update message, an Xn setup message or a resource state update message.
4. The method according to Supplement 2, wherein the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.
5. The method according to Supplement 2, wherein the first indication information is used by the second network device to determine whether to stop an AI/ML model or an AI/ML model group in the second network device, and/or, determine whether to stop an AI/ML model or an AI/ML model group in a terminal equipment within a cell.
6. The method according to Supplement 5, wherein in a case where at least one piece of the identification information of the signal processing function to which the AI/ML model in the second network device corresponds, the identification information of the AI/ML model, the identification information of the AI/ML model group, the intra-group identification information of the AI/ML model group or the version information of the AI/ML model is in consistence with the first indication information, the second network device determines to stop the AI/ML model in the second network device; and/or
   in a case where at least one piece of the identification information of the signal processing function to which the AI/ML model in a terminal equipment within the cell corresponds, the identification information of the AI/ML model, or the version information of the AI/ML model is in consistence with the first indication information, the second network device notifies the terminal equipment to stop the AI/ML model in the terminal equipment.
7. The method according to any one of Supplements 2 to 6, wherein the method includes:
   the first network device receives a confirmation message or a rejection message or a failure message transmitted by the second network device.
8. The method according to Supplement 1, wherein the first network device transmits second indication information for updating the AI/ML model, to the second network device via an Xn interface.
9. The method according to Supplement 8, wherein the second indication information is carried by an XnAP message, the XnAP message including a configuration update message, an Xn setup message or a resource state update message.
10. The method according to Supplement 8, wherein the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.
11. The method according to Supplement 8, wherein the second indication information is used by the second network device to determine whether to update the AI/ML model in the second network device, and/or, determine whether to update an AI/ML model in a terminal equipment within a cell.
12. The method according to Supplement 11, wherein in a case where the identification information of the signal processing function to which the AI/ML model in the second network device corresponds is in consistence with the second indication information and the identification information of the AI/ML model is not in consistence with the second indication information and/or the version information of the AI/ML model is lower than the version information of the AI/ML model in the second indication information, the second network device determines to update the AI/ML model in the second network device; and/or
   in a case where the identification information of the signal processing function to which the AI/ML model in the terminal equipment within the cell corresponds is in consistence with the second indication information and the identification information of the AI/ML model is not in consistence with the second indication information and/or the version information of the AI/ML model is lower than the version information of the AI/ML model in the second indication information, the second network device notifies the terminal equipment to update the AI/ML model in the terminal equipment.
13. The method according to any one of Supplements 8 to 12, wherein the method includes:
   the first network device receives a confirmation message or a rejection message or a failure message transmitted by the second network device.
14. The method according to Supplement 1, wherein the first network device transmits first indication information for stopping the AI/ML model, to the core network device via an NG interface.
15. The method according to Supplement 14, wherein the first indication information is carried by an NGAP message, the NGAP message including an RAN configuration update message, an NG setup message, an Xn setup message or an RAN configuration transfer message.
16. The method according to Supplement 14, wherein the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.
17. The method according to Supplement 14, wherein the first indication information is used by the core network device to determine whether to stop an AI/ML model in a network device and/or a terminal equipment within an area.
18. The method according to Supplement 17, wherein in a case where at least one piece of identification information of a signal processing function to which the AI/ML model in the network device within the area corresponds, identification information of the AI/ML model, identification information of the AI/ML model group, intra-group identification information of the AI/ML model group or version information of the AI/ML model is in consistence with the first indication information, the core network device notifies the network device via an NGAP message to stop the AI/ML model in the network device; and/or
   in a case where at least one piece of identification information of a signal processing function to which the AI/ML model in the terminal equipment within the area corresponds, identification information of the AI/ML model, identification information of the AI/ML model group, intra-group identification information of the AI/ML model group or version information of the AI/ML model is in consistence with the first indication information, the core network device notifies the terminal equipment via an NAS message to stop the AI/ML model in the terminal equipment.
19. The method according to any one of Supplements 14 to 18, wherein the method includes:
   the first network device receives a confirmation message or a rejection message or a failure message transmitted by the core network device.
20. The method according to Supplement 1, wherein the first network device transmits second indication information for updating the AI/ML model, to the core network device via an NG interface.
21. The method according to Supplement 20, wherein the second indication information is carried by an NGAP message, the NGAP message including an RAN configuration update message, an NG setup message, an Xn setup message or an RAN configuration transfer message.
22. The method according to Supplement 20, wherein the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.
23. The method according to Supplement 20, wherein the second indication information is used by the core network device to determine whether to update an AI/ML model in a network device and/or a terminal equipment within an area.
24. The method according to Supplement 23, wherein in a case where the identification information of the signal processing function to which the AI/ML model in the network device within the area corresponds is in consistence with the second indication information and the identification information of the AI/ML model is not in consistence with the second indication information and/or the version information of the AI/ML model is lower than the version information of the AI/ML model in the second indication information, the core network notifies the network device via an NGAP message to update the AI/ML model in the network device; and/or
   in a case where the identification information of the signal processing function to which the AI/ML model in the terminal equipment within the area corresponds is in consistence with the second indication information and the identification information of the AI/ML model is not in consistence with the second indication information and/or the version information of the AI/ML model is lower than the version information of the AI/ML model in the second indication information, the core network device notifies the terminal equipment via an NAS message to update the AI/ML model in the terminal equipment.
25. The method according to any one of Supplements 20 to 24, wherein the method includes:
   the first network device receives a confirmation message or a rejection message or a failure message transmitted by the core network device.
26. The method according to Supplement 1, wherein the first network device transmits first indication information for stopping the AI/ML model to one or more terminal equipments in a cell or an area via system information and/or a paging message.
27. The method according to Supplement 26, wherein the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.
28. The method according to Supplement 27, wherein the first indication information is used by the terminal equipment to determine whether to stop the AI/ML model in the terminal equipment;
29. The method according to Supplement 28, wherein in a case where at least one piece of the identification information of the signal processing function to which the AI/ML model in a terminal equipment corresponds, the identification information of the AI/ML model, the identification information of the AI/ML model group, the intra-group identification information of the AI/ML model group or the version information of the AI/ML model is in consistence with the first indication information, the terminal equipment determines to stop the AI/ML model in the terminal equipment.
30. The method according to Supplement 1, wherein the first network device transmits second indication information for updating the AI/ML model to one or more terminal equipments in a cell or an area via system information and/or a paging message.
31. The method according to Supplement 30, wherein the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.
32. The method according to Supplement 30, wherein the second indication information is used by the terminal equipment to determine whether to update the AI/ML model in the terminal equipment;
33. The method according to Supplement 32, wherein in a case where the identification information of the signal processing function to which the AI/ML model in the terminal equipment corresponds is in consistence with the second indication information and the identification information of the AI/ML model is not in consistence with the second indication information and/or the version information of the AI/ML model is lower than the version information of the AI/ML model in the second indication information, the terminal equipment determines to update the AI/ML model in the terminal equipment.
34. The method according to Supplement 1, wherein a terminal equipment in an inactive state acquires the identification information of the AI/ML model and/or the version information of the AI/ML model from system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.
35. The method according to Supplement 34, wherein the terminal equipment downloads the updated AI/ML model or AI/ML model group from a cell, or loads the updated AI/ML model or AI/ML model group from a memory, or acquires the updated AI/ML model or AI/ML model group from the system information.
36. The method according to Supplement 1, wherein a terminal equipment in an active state acquires the identification information of the AI/ML model and/or the version information of the AI/ML model from a target cell, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.
37. The method according to Supplement 36, wherein the terminal equipment downloads the updated AI/ML model or AI/ML model group from the target cell, or loads the updated AI/ML model or AI/ML model group from a memory, or acquires the updated AI/ML model or AI/ML model group from the system information.
38. The method according to Supplement 1, wherein the method further includes:
   the first network device receives a request transmitted by the terminal equipment; and transmits system information related to the AI/ML model to the terminal equipment.
39. The method according to Supplement 38, wherein the terminal equipment acquires the identification information of the AI/ML model and/or the version information of the AI/ML model from the system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.
40. The method according to Supplement 38, wherein the system information is cell-specific or area-specific.
41. The method according to any one of Supplements 1 to 40, wherein the method further includes:
   the first network device further generates an exclusion list and/or a permission list; and
   transmits the exclusion list and/or the permission list to the second network device or the terminal equipment or the core network device.
42. The method according to Supplement 41, wherein the method further includes:
   the first network device adds an AI/ML model identifier of an AI/ML model with performance below a threshold (poor performance) to an AI/ML model exclusion list of a cell corresponding to the network device.
43. The method according to Supplement 42, wherein the exclusion list includes an AI model function identifier and a corresponding AI model identifier.
44. The method according to Supplement 43, wherein the exclusion list further includes an AI model group identifier and an intra-group identifier corresponding to an AI function.
45. The method according to Supplement 41, wherein the method further includes:
   the first network device adds an AI/ML model identifier of an AI/ML model with performance above or equal to a threshold (good performance) to an AI/ML model permission list of a cell corresponding to the network device.
46. The method according to Supplement 45, wherein the permission list includes an AI model function identifier and a corresponding AI model identifier.
47. The method according to Supplement 46, wherein the permission list further includes an AI model group identifier and an intra-group identifier corresponding to an AI function.
48. An information processing method, including:
   a second network device receives indication information transmitted by a first network device; and
   stops or updates or switches an AI/ML model or an AI/ML model group for a signal processing function according to the indication information.
49. The method according to Supplement 48, wherein the first network device transmits first indication information for stopping the AI/ML model, to the second network device via an Xn interface.
50. The method according to Supplement 49, wherein the first indication information is carried by an XnAP message, the XnAP message including a configuration update message, an Xn setup message or a resource state update message.
51. The method according to Supplement 49, wherein the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.
52. The method according to Supplement 49, wherein the first indication information is used by the second network device to determine whether to stop an AI/ML model or an AI/ML model group in the second network device, and/or, determine whether to stop an AI/ML model or an AI/ML model group in a terminal equipment within a cell.
53. The method according to Supplement 52, wherein in a case where at least one piece of the identification information of the signal processing function to which the AI/ML model in the second network device corresponds, the identification information of the AI/ML model, the identification information of the AI/ML model group, the intra-group identification information of the AI/ML model group or the version information of the AI/ML model is in consistence with the first indication information, the second network device determines to stop the AI/ML model in the second network device; and/or
   in a case where at least one piece of the identification information of the signal processing function to which the AI/ML model in a terminal equipment within the cell corresponds, the identification information of the AI/ML model, or the version information of the AI/ML model is in consistence with the first indication information, the second network device notifies the terminal equipment to stop the AI/ML model in the terminal equipment.
54. The method according to any one of Supplements 49 to 53, wherein the method includes:
   the second network device transmits a confirmation message or a rejection message or a failure message to the first network device.
55. The method according to Supplement 48, wherein the first network device transmits second indication information for updating the AI/ML model, to the second network device via an Xn interface.
56. The method according to Supplement 55, wherein the second indication information is carried by an XnAP message, the XnAP message including a configuration update message, an Xn setup message or a resource state update message.
57. The method according to Supplement 55, wherein the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.
58. The method according to Supplement 55, wherein the second indication information is used by the second network device to determine whether to update the AI/ML model in the second network device, and/or, determine whether to update an AI/ML model in a terminal equipment within a cell.
59. The method according to Supplement 58, wherein in a case where the identification information of the signal processing function to which the AI/ML model in the second network device corresponds is in consistence with the second indication information and the identification information of the AI/ML model is not in consistence with the second indication information and/or the version information of the AI/ML model is lower than the version information of the AI/ML model in the second indication information, the second network device determines to update the AI/ML model in the second network device; and/or
   in a case where the identification information of the signal processing function to which the AI/ML model in the terminal equipment within the cell corresponds is in consistence with the second indication information and the identification information of the AI/ML model is not in consistence with the second indication information and/or the version information of the AI/ML model is lower than the version information of the AI/ML model in the second indication information, the second network device notifies the terminal equipment to update the AI/ML model in the terminal equipment.
60. The method according to any one of Supplements 55 to 59, wherein the method includes:
   the second network device transmits a confirmation message or a rejection message or a failure message to the first network device.
61. The method according to any one of Supplements 48 to 60, wherein the method further includes:
   the second network device further receives an exclusion list and/or a permission list transmitted by the first network device.
62. An information processing method, including:
   a core network device receives indication information transmitted by a first network device; and
   stops or updates or switches an AI/ML model or an AI/ML model group for a signal processing function according to the indication information.
63. The method according to Supplement 62, wherein the first network device transmits first indication information for stopping the AI/ML model or AI/ML model group, to the core network device via an NG interface.
64. The method according to Supplement 63, wherein the first indication information is carried by an NGAP message, the NGAP message including an RAN configuration update message, an NG setup message, an Xn setup message or an RAN configuration transfer message.
65. The method according to Supplement 63, wherein the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.
66. The method according to Supplement 63, wherein the first indication information is used by the core network device to determine whether to stop an AI/ML model or an AI/ML model group in a network device and/or a terminal equipment within an area.
67. The method according to Supplement 66, wherein in a case where at least one piece of identification information of a signal processing function to which the AI/ML model in the network device within the area corresponds, identification information of the AI/ML model, identification information of the AI/ML model group, intra-group identification information of the AI/ML model group or version information of the AI/ML model is in consistence with the first indication information, the core network device notifies the network device via an NGAP message to stop the AI/ML model in the network device; and/or
   in a case where at least one piece of the identification information of the signal processing function to which the AI/ML model in a terminal equipment within the area corresponds, the identification information of the AI/ML model, or the version information of the AI/ML model is in consistence with the first indication information, the core network device notifies the terminal equipment to stop the AI/ML model in the terminal equipment via an NAS message.
68. The method according to any one of Supplements 63 to 67, wherein the method includes:
   the core network device transmits a confirmation message or a rejection message or a failure message to the first network device.
69. The method according to Supplement 62, wherein the first network device transmits second indication information for updating the AI/ML model, to the core network device via an NG interface.
70. The method according to Supplement 69, wherein the second indication information is carried by an NGAP message, the NGAP message including an RAN configuration update message, an NG setup message, an Xn setup message or an RAN configuration transfer message.
71. The method according to Supplement 69, wherein the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.
72. The method according to Supplement 69, wherein the second indication information is used by the core network device to determine whether to update an AI/ML model or an AI/ML model group in a network device and/or a terminal equipment within an area.
73. The method according to Supplement 72, wherein in a case where the identification information of the signal processing function to which the AI/ML model in the network device within the area corresponds is in consistence with the second indication information and the identification information of the AI/ML model is not in consistence with the second indication information and/or the version information of the AI/ML model is lower than the version information of the AI/ML model in the second indication information, the core network notifies the network device via an NGAP message to update the AI/ML model in the network device; and/or
   in a case where the identification information of the signal processing function to which the AI/ML model in the terminal equipment within the area corresponds is in consistence with the second indication information and the identification information of the AI/ML model is not in consistence with the second indication information and/or the version information of the AI/ML model is lower than the version information of the AI/ML model in the second indication information, the core network device notifies the terminal equipment via an NAS message to update the AI/ML model in the terminal equipment.
74. The method according to any one of Supplements 69 to 73, wherein the method includes:
   the core network device transmits a confirmation message or a rejection message or a failure message to the first network device.
75. The method according to any one of Supplements 62 to 74, wherein the method further includes:
   the core network device further receives an exclusion list and/or a permission list transmitted by the first network device.
76. An information processing method, including:
   a terminal equipment receives indication information transmitted by a first network device; and
   stops or updates or switches an AI/ML model or an AI/ML model group for a signal processing function according to the indication information.
77. The method according to Supplement 76, wherein the first network device transmits first indication information for stopping the AI/ML model or the AI/ML model group to one or more terminal equipments in a cell or an area via system information and/or a paging message.
78. The method according to Supplement 77, wherein the first indication information includes at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.
79. The method according to Supplement 77, wherein the first indication information is used by the terminal equipment to determine whether to stop the AI/ML model or the AI/ML model group in the terminal equipment.
80. The method according to Supplement 79, wherein in a case where at least one piece of the identification information of the signal processing function to which the AI/ML model in a terminal equipment corresponds, the identification information of the AI/ML model, the identification information of the AI/ML model group, the intra-group identification information of the AI/ML model group or the version information of the AI/ML model is in consistence with the first indication information, the terminal equipment determines to stop the AI/ML model in the terminal equipment.
81. The method according to Supplement 76, wherein the first network device transmits second indication information for updating the AI/ML model to one or more terminal equipments in a cell or an area via system information and/or a paging message.
82. The method according to Supplement 81, wherein the second indication information includes at least one piece of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.
83. The method according to Supplement 81, wherein the second indication information is used by the terminal equipment to determine whether to update the AI/ML model or the AI/ML model group in the terminal equipment.
84. The method according to Supplement 83, wherein in a case where the identification information of the signal processing function to which the AI/ML model in the terminal equipment corresponds is in consistence with the second indication information and the identification information of the AI/ML model is not in consistence with the second indication information and/or the version information of the AI/ML model is lower than the version information of the AI/ML model in the second indication information, the terminal equipment determines to update the AI/ML model in the terminal equipment.
85. The method according to Supplement 76, wherein a terminal equipment in an inactive state acquires the identification information of the AI/ML model and/or the version information of the AI/ML model from system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.
86. The method according to Supplement 85, wherein the terminal equipment downloads the updated AI/ML model from a cell, or loads the updated AI/ML model from a memory, or acquires the updated AI/ML model from the system information.
87. The method according to Supplement 76, wherein a terminal equipment in an active state acquires the identification information of the AI/ML model and/or the version information of the AI/ML model from a target cell, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.
88. The method according to Supplement 87, wherein the terminal equipment downloads the updated AI/ML model from the target cell, or loads the updated AI/ML model from a memory, or acquires the updated AI/ML model from the system information.
89. The method according to Supplement 76, wherein the method further includes:
   the terminal equipment transmits a request to the first network device; and
   the terminal equipment receives system information related to the AI/ML model.
90. The method according to Supplement 89, wherein the terminal equipment acquires the identification information of the AI/ML model and/or the version information of the AI/ML model from the system information, and in a case where the identification information of the AI/ML model in the terminal equipment is not in consistence with the acquired identification information and/or the version information of the AI/ML model is lower than the acquired version information, the terminal equipment determines to update the AI/ML model in the terminal equipment.
91. The method according to Supplement 89, wherein the system information is cell-specific or area-specific.
92. The method according to any one of Supplements 76 to 91, wherein the method further includes:
   the terminal equipment further receives an exclusion list and/or a permission list transmitted by the first network device.
93. An information processing method, including:
   a network device receives model identification information transmitted by the terminal equipment, and model performance information and/or model operation information corresponding to the model identification information.
94. The method according to Supplement 93, wherein the model performance information is generated by monitoring the AI/ML model by the terminal equipment.
95. The method according to Supplement 94, wherein the terminal equipment performs the monitoring for output performance of the AI/ML model, and/or, the terminal equipment performs the monitoring for input and output data distribution of the AI/ML model.
96. The method according to Supplement 93, wherein the model operation information is determined by the terminal equipment according to a monitoring result of monitoring of the AI/ML model.
97. The method according to any one of Supplements 94 to 96, wherein the monitoring result is related to the output performance of the AI/ML model or the distribution of input and output data of the AI/ML model, expressed at two or more levels.
98. The method according to any one of Supplements 93 to 97, wherein the model operation information includes at least one of the following: model failure information, model activation information, model deactivation information, model switching information, model continued use information, model disuse information, model rollback information, or model fail-to-recovery information.
99. The method according to any one of Supplements 93 to 98, wherein the terminal equipment transmits the model identification information and the model performance information and/or model operation information corresponding to the model identification information via at least one or any combination of uplink control information (UCI), MAC CE or RRC signaling.
100. The method according to any one of Supplements 93 to 98, wherein the terminal equipment transmits the model identification information and the model performance information and/or model operation information corresponding to the model identification information via an uplink control channel and/or an uplink data channel.
101. The method according to any one of Supplements 93 to 100, wherein the method further includes:
   the network device transmits configuration information or indication information to the terminal equipment, so as to schedule the terminal equipment to transmit the model identification information and the model performance information and/or model operation information corresponding to the model identification information.
102. The method according to Supplement 101, wherein the configuration information or indication information is dedicated information for the AI/ML model.
103. The method according to any one of Supplements 93 to 102, wherein the terminal equipment transmits the model identification information and the model performance information and/or model operation information corresponding to the model identification information via a periodic report, a semi-persistent report or a non-periodic report.
104. The method according to any one of Supplements 93 to 103, wherein the terminal equipment monitors the AI/ML model, and the AI/ML model is a model deployed in the first network device or a bilateral model.
105. The method according to any one of Supplements 93 to 104, wherein the method further includes:
   the network device transmits request information for requesting monitoring data, to the terminal equipment.
106. The method according to Supplement 105, wherein the request information includes at least one of the following: a performance indicator, a data distribution indicator, or monitored model operation information.
107. The method according to Supplement 105, wherein the monitoring data is historical information, and the request information includes time range indication information.
108. The method according to Supplement 105, wherein the request information includes a model identifier.
109. An information processing method, including:
   a network device transmits model identification information, and model performance information and/or model operation information corresponding to the model identification information to a terminal equipment or a core network device or other network device.
110. The method according to Supplement 109, wherein the model performance information is generated by monitoring the AI/ML model by the network device.
111. The method according to Supplement 110, wherein the network device performs the monitoring for output performance of the AI/ML model, and/or, the network device performs the monitoring for input and output data distribution of the AI/ML model.
112. The method according to Supplement 109, wherein the model operation information is determined by the network device according to a monitoring result of monitoring of the AI/ML model.
113. The method according to any one of Supplements 110 to 112, wherein the monitoring result is related to the output performance of the AI/ML model or the distribution of input and output data of the AI/ML model, expressed at two or more levels.
114. The method according to any one of Supplements 109 to 113, wherein the model operation information includes at least one of the following: model failure information, model activation information, model deactivation information, model switching information, model continued use information, model disuse information, model rollback information, or model fail-to-recovery information.
115. The method according to any one of Supplements 109 to 114, wherein the network device transmits the model identification information and the model performance information and/or model operation information corresponding to the model identification information to the terminal equipment via at least one or any combination of downlink control information (DCI), MAC CE or RRC signaling.
116. The method according to any one of Supplements 109 to 115, wherein the network device transmits the model identification information and the model performance information and/or model operation information corresponding to the model identification information to the terminal equipment via a downlink control channel and/or a downlink data channel.
117. The method according to any one of Supplements 109 to 116, wherein the network device monitors the AI/ML model, and the AI/ML model is a model deployed in the terminal equipment or a bilateral model.
118. The method according to any one of Supplements 109 to 117, wherein the method further includes:
   the network device receives request information for requesting monitoring data, transmitted by the terminal equipment.
119. The method according to Supplement 118, wherein the request information includes at least one of the following: a performance indicator, a data distribution indicator, or monitored model operation information.
120. The method according to Supplement 118, wherein the monitoring data is historical information, and the request information includes time range indication information.
121. The method according to Supplement 118, wherein the request information includes a model identifier.
122. An information processing method, including:
   a network device transmits indicator information related to model monitoring and/or model operation decision information based on model monitoring to the terminal equipment.
123. The method according to Supplement 122, wherein the indicator information related to model monitoring includes at least one of the following: performance indicator information related to model output, data distribution indicator information related to the model output, or data distribution indicator information related to model input.
124. The method according to Supplement 122 or 123, wherein the indicator information related to model monitoring is model identifier dedicated information, or is model monitoring common information.
125. The method according to Supplement 122, wherein the model operation decision information based on model monitoring includes at least one of the following: relevant information on deciding model deactivation, relevant information on deciding model rollback, relevant information on deciding model switching, relevant information on deciding model stop, relevant information on determining model failure, relevant information on deciding a model from stop to enablement, or relevant information on deciding model update.
126. The method according to Supplement 122 or 125, wherein the model operation decision information based on model monitoring is model identifier dedicated information, or is model monitoring common information.
127. The method according to any one of Supplements 122 to 126, wherein the network device and/or the terminal equipment operate(s) the model according to a result of model monitoring.
128. The method according to any one of Supplements 122 to 126, wherein the terminal equipment decides an operation on the model according to a result of model monitoring and reports the operation to the network device; after receiving a confirmation instruction from the network device, the terminal equipment performs the operation on the model.
129. The method according to any one of Supplements 122 to 126, wherein the terminal equipment decides an operation on the model according to a result of model monitoring and reports the operation to the network device, the network device performs the operation on the model.
130. An information processing method, including:
   a network device transmits model inquiry information to a terminal equipment; and
   the network device receives model feedback information transmitted by the terminal equipment, and performs corresponding operations on the AI/ML model according to the model feedback information.
131. The method according to Supplement 130, wherein the model inquiry information includes a model identifier; the model feedback information includes at least one of the following: AI/ML model availability information corresponding to the model identifier, AI/ML model deactivation information corresponding to the model identifier, AI/ML model rollback information corresponding to the model identifier, or AI/ML model failure information corresponding to the model identifier.
132. The method according to Supplement 131, wherein the network device continues to use an AI/ML model corresponding to the model identifier, or, activates the AI/ML model corresponding to the model identifier, or, deactivates the AI/ML model corresponding to the model identifier.
133. The method according to Supplement 130, wherein the model inquiry information includes a plurality of model identifiers; the model feedback information includes a model identifier selected by the terminal equipment from the plurality of model identifiers.
134. The method according to Supplement 133, wherein the network device activates an AI/ML model corresponding to the selected model identifier.
135. A network device, including a memory and a processor, the memory storing a computer program, and the processor being configured to execute the computer program to realize the information indication method according to any one of Supplements 1 to 47 or the information processing method according to any one of Supplements 48 to 61 or the information processing method according to any one of Supplements 93 to 134.
136. A core network device, including a memory and a processor, the memory storing a computer program, and the processor being configured to execute the information processing method according to any one of Supplements 62 to 75.
137. A terminal equipment, including a memory and a processor, the memory storing a computer program, and the processor being configured to execute the information processing method according to any one of Supplements 76 to 92.

## Claims

1. An information indication apparatus, comprising:
a determining unit configured to determine whether to stop or update or switch an AI/ML model or an AI/ML model group for a signal processing function; and
a transmitting unit configured to transmit indication information to a second network device or a terminal equipment or a core network device in a case where it is determined to stop or update or switch the AI/ML model or the AI/ML model group.

2. The apparatus according to claim 1, wherein first indication information for stopping the AI/ML model or the AI/ML model group, and/or second indication information for updating the AI/ML model or the AI/ML model group, is/are transmitted to the second network device via an Xn interface.

3. The apparatus according to claim 2, wherein the first indication information is carried by an XnAP message, the XnAP message comprising a configuration update message, an Xn setup message or a resource state update message; and
the first indication information comprises at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

4. The apparatus according to claim 2, wherein the first indication information is used by the second network device to determine whether to stop an AI/ML model or an AI/ML model group in the second network device, and/or, determine whether to stop an AI/ML model or an AI/ML model group in a terminal equipment within a cell,
wherein in a case where at least one piece of identification information of the signal processing function to which the AI/ML model in the second network device corresponds, identification information of the AI/ML model in the second network device, identification information of the AI/ML model group in the second network device, intra-group identification information of the AI/ML model group in the second network device or version information of the AI/ML model in the second network device is in consistence with the first indication information, the second network device determines to stop the AI/ML model in the second network device; and/or
in a case where at least one piece of identification information of the signal processing function to which the AI/ML model in a terminal equipment within the cell corresponds, identification information of the AI/ML model in a terminal equipment within the cell, identification information of the AI/ML model group in a terminal equipment within the cell, intra-group identification information of the AI/ML model group in a terminal equipment within the cell or version information of the AI/ML model in a terminal equipment within the cell is in consistence with the first indication information, the second network device notifies the terminal equipment to stop the AI/ML model in the terminal equipment.

5. The apparatus according to claim 2, wherein the second indication information is carried by an XnAP message, the XnAP message comprising a configuration update message, an Xn setup message or a resource state update message,
wherein the second indication information comprises at least one piece of the following: identification information of the signal processing function, identification information of a new AI/ML model, identification information of a new AI/ML model group, intra-group identification information of a new AI/ML model group, version information of a new AI/ML model, identification information of an original AI/ML model, identification information of an original AI/ML model group, intra-group identification information of an original AI/ML model group, or version information of an original AI/ML model.

6. The apparatus according to claim 2, wherein the second indication information is used by the second network device to determine whether to update an AI/ML model or an AI/ML model group in the second network device, and/or, determine whether to update an AI/ML model or an AI/ML model group in a terminal equipment within a cell,
wherein in a case where identification information of the signal processing function to which the AI/ML model in the second network device corresponds is in consistence with the second indication information, and the identification information of the AI/ML model is not in consistence with the second indication information and/or version information of the AI/ML model is lower than version information of the AI/ML model in the second indication information, the second network device determines to update the AI/ML model in the second network device; and/or
in a case where identification information of the signal processing function to which the AI/ML model in the terminal equipment within the cell corresponds is in consistence with the second indication information, and identification information of the AI/ML model is not in consistence with the second indication information and/or version information of the AI/ML model is lower than version information of the AI/ML model in the second indication information, the second network device notifies the terminal equipment to update the AI/ML model in the terminal equipment.

7. The apparatus according to claim 1, wherein first indication information for stopping the AI/ML model or the AI/ML model group, and/or second indication information for updating the AI/ML model or the AI/ML model group, is/are transmitted to the core network device via an NG interface.

8. The apparatus according to claim 7, wherein the first indication information is carried by an NGAP message, the NGAP message comprising an RAN configuration update message, an NG setup message, an Xn setup message or an RAN configuration transfer message;
the first indication information comprises at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

9. The apparatus according to claim 7, wherein the first indication information is used by the core network device to determine whether to stop an AI/ML model or an AI/ML model group in a network device and/or a terminal equipment within an area,
wherein in a case where at least one piece of identification information of a signal processing function to which the AI/ML model in the network device within the area corresponds, identification information of the AI/ML model, identification information of the AI/ML model group, intra-group identification information of the AI/ML model group or version information of the AI/ML model is in consistence with the first indication information, the core network device notifies the network device via an NGAP message to stop the AI/ML model or the AI/ML model group in the network device; and/or
in a case where at least one piece of identification information of a signal processing function to which the AI/ML model in the terminal equipment within the area corresponds, identification information of the AI/ML model, identification information of the AI/ML model group, intra-group identification information of the AI/ML model group or version information of the AI/ML model is in consistence with the first indication information, the core network device notifies the terminal equipment via an NAS message to stop the AI/ML model or the AI/ML model group in the terminal equipment.

10. The apparatus according to claim 7, wherein the second indication information is carried by an NGAP message, the NGAP message comprising an RAN configuration update message, an NG setup message, an Xn setup message or an RAN configuration transfer message;
the second indication information comprises at least one piece of the following: identification information of the signal processing function, identification information of a new AI/ML model, identification information of a new AI/ML model group, intra-group identification information of a new AI/ML model group, version information of a new AI/ML model, identification information of an original AI/ML model, identification information of an original AI/ML model group, intra-group identification information of an original AI/ML model group, or version information of an original AI/ML model.

11. The apparatus according to claim 7, wherein the second indication information is used by the core network device to determine whether to update an AI/ML model or an AI/ML model group in a network device and/or a terminal equipment within an area,
wherein in a case where identification information of a signal processing function to which the AI/ML model in the network device within the area corresponds is in consistence with the second indication information and identification information of the AI/ML model is not in consistence with the second indication information and/or version information of the AI/ML model is lower than version information of the AI/ML model in the second indication information, the core network notifies the network device via an NGAP message to update the AI/ML model in the network device; and/or
in a case where identification information of a signal processing function to which the AI/ML model in the terminal equipment within the area corresponds is in consistence with the second indication information and identification information of the AI/ML model is not in consistence with the second indication information and/or version information of the AI/ML model is lower than version information of the AI/ML model in the second indication information, the core network device notifies the terminal equipment via an NAS message to update the AI/ML model in the terminal equipment.

12. The apparatus according to claim 1, wherein the first indication information for stopping the AI/ML model or the AI/ML model group, and/or the second indication information for updating the AI/ML model or the AI/ML model group, is/are transmitted to one or more terminal equipments in a cell or an area via system information and/or a paging message.

13. The apparatus according to claim 12, wherein the first indication information comprises at least one of the following: identification information of the signal processing function, identification information of the AI/ML model, version information of the AI/ML model, identification information of the AI/ML model group, intra-group identification information of the AI/ML model group, type information of the AI/ML model, storage size information of the AI/ML model or the AI/ML model group, a model exclusion list and/or a model permission list, or model identification information and model performance information and/or model operation information corresponding to the model identification information.

14. The apparatus according to claim 12, wherein the first indication information is used by the terminal equipment to determine whether to stop the AI/ML model or the AI/ML model group in the terminal equipment,
wherein in a case where at least one piece of identification information of the signal processing function to which the AI/ML model in the terminal equipment corresponds, identification information of the AI/ML model, identification information of the AI/ML model group, intra-group identification information of the AI/ML model group or version information of the AI/ML model is in consistence with the first indication information, the terminal equipment determines to stop the AI/ML model in the terminal equipment.

15. The apparatus according to claim 12, wherein the second indication information comprises at least one of the following: identification information of the signal processing function, identification information of a new AI/ML model, identification information of a new AI/ML model group, intra-group identification information of the new AI/ML model group, version information of the new AI/ML model, identification information of an original AI/ML model, identification information of an original AI/ML model group, intra-group identification information of the original AI/ML model group, version information of the original AI/ML model, a model exclusion list and/or a model permission list, or model identification information and model performance information and/or model operation information corresponding to the model identification information.

16. The apparatus according to claim 12, wherein the second indication information is used by the terminal equipment to determine whether to update the AI/ML model or the AI/ML model group in the terminal equipment;
wherein in a case where identification information of the signal processing function to which the AI/ML model in the terminal equipment corresponds is in consistence with the second indication information and identification information of the AI/ML model is not in consistence with the second indication information and/or version information of the AI/ML model is lower than version information of the AI/ML model in the second indication information, the terminal equipment determines to update the AI/ML model in the terminal equipment.

17. The apparatus according to claim 1, wherein a terminal equipment in an inactive state acquires identification information of the AI/ML model and/or version information of the AI/ML model from system information, and in a case where the identification information of the AI/ML model in the terminal equipment is not in consistence with an acquired identification information and/or the version information of the AI/ML model is lower than an acquired version information, the terminal equipment determines to update the AI/ML model or the AI/ML model group in the terminal equipment,
wherein the terminal equipment downloads the updated AI/ML model or AI/ML model group from a cell, or loads the updated AI/ML model or AI/ML model group from a memory, or acquires the updated AI/ML model or AI/ML model group from the system information.

18. The apparatus according to claim 1, wherein a terminal equipment in an active state acquires identification information of the AI/ML model and/or version information of the AI/ML model from a target cell, and in a case where the identification information of the AI/ML model in the terminal equipment is not in consistence with an acquired identification information and/or the version information of the AI/ML model is lower than an acquired version information, the terminal equipment determines to update the AI/ML model or the AI/ML model group in the terminal equipment,
wherein the terminal equipment downloads the updated AI/ML model or AI/ML model group from the target cell, or loads the updated AI/ML model or AI/ML model group from a memory, or acquires the updated AI/ML model or AI/ML model group from system information.

19. An information processing apparatus, comprising:
a receiving unit configured to receive indication information transmitted by a first network device; and
a processing unit configured to stop or update or switch an AI/ML model or an AI/ML model group for a signal processing function according to the indication information.

20. A communication system, comprising:
a network device configured to determine whether to stop or update or switch an AI/ML model or an AI/ML model group for a signal processing function, and transmit indication information to a second network device or a terminal equipment or a core network device in a case where it is determined to stop or update or switch the AI/ML model or the AI/ML model group.
